# EUROPEAN PATENT SPECIFICATION

(11) **EP 3 657 091 B1**
(45) Date of publication and mention of the grant of the patent: **27.10.2021**
(21) Application number: 17918515.2
(22) Date of filing: 18.07.2017
(51) Int. Cl.: F24H 4/02, F24D 3/08, F24D 19/10, F24H 4/04

(54) **HOT WATER SUPPLY DEVICE**
WARMWASSERVERSORGUNGSVORRICHTUNG
DISPOSITIF D'ALIMENTATION EN EAU CHAUDE

(43) Date of publication of application: 27.05.2020
(73) Proprietor: Mitsubishi Electric Corporation, Chiyoda-ku Tokyo 100-8310 (JP)
(72) Inventor: TAKAYAMA, Keisuke, Tokyo 100-8310 (JP); YOSHIDA, Jun, Tokyo 100-8310 (JP)
(74) Representative: Studio Torta S.p.A.
(86) International application number: PCT/JP2017/025839
(87) International publication number: WO 2019/016845

(56) References cited:
- WO-A1-2012/121382
- WO-A1-2013/084301
- JP-A- 2006 336 937
- JP-A- 2007 139 275
- JP-A- 2007 198 630
- JP-A- 2007 327 728
- JP-A- 2007 327 728
- JP-A- 2015 055 389
- JP-A- 2015 224 796
- JP-A- 2016 090 093
- JP-A- 2017 096 601
- JP-A- 2017 096 601

## Description

### Technical Field

The present invention relates to a water heater, and more particularly, to a water heater provided with a pump that conveys a heat medium to a hot water tank. Patent Literature 2 discloses a water heater having the features of the preamble of claim 1.

### Background Art

Some water heater provided with a hot water tank that stores a heat medium, a pump that conveys the heat medium to the hot water tank, and a thermistor that measures the temperature of the hot water tank has been proposed (for example, see Patent Literature 1). Herein, a first temperature distribution of the heat medium inside the hot water tank when the temperature of the heat medium in the hot water tank has fallen because of heat dissipation from the hot water tank is different from a second temperature distribution of the heat medium inside the hot water tank when the temperature of the heat medium inside the hot water tank has fallen because of an increase in the amount of hot water used. A controller of the water heater of Patent Literature 1 distinguishes between the first temperature distribution and the second temperature distribution on the basis of the temperatures measured by the thermistor. Also, the controller of the water heater of Patent Literature 1 changes the flow rate of the pump when the controller executes a boiling operation on the basis of the distinguished resultant temperature distribution. With this arrangement, efficiency is improved when the water heater of Patent Literature 1 boils the heat medium inside the hot water tank.

### Citation List

### Patent Literature

Patent Literature 1: Japanese Unexamined Patent Application Publication No. 2015-224796
Patent Literature 2: JP 2007 327728
Patent Literature 3: JP 2007 198630
Patent Literature 4: JP2017 096601

### Summary of Invention

### Technical Problem

The controller of the water heater of Patent Literature 1 distinguishes between the temperature distributions of the heat medium in the hot water tank on the basis of the change over time in the temperature measured by the thermistor. Herein, one thermistor is provided to the hot water tank of the water heater of Patent Literature 1. For this reason, there is a possibility that the distinguished result will diverge from the actual temperature distribution. In other words, there is a problem in that the water heater of Patent Literature 1 has difficulty ensuring the accuracy of distinguishing between temperature distributions of the heat medium inside the hot water tank.

The present invention has been devised to solve problems like the above, and an object of the present invention is to provide a water heater capable of distinguishing more accurately between temperature distributions of a heat medium inside a hot water tank.

### Solution to Problem

A water heater according to an embodiment of the present invention is provided with a hot water tank that stores a heat medium, a heating heat exchanger that heats the heat medium supplied to the hot water tank, a first pump that conveys the heat medium to the hot water tank, a heat medium circuit in which the hot water tank, the first pump, and the heating heat exchanger are provided, a lower part temperature sensor, provided in the hot water tank, that measures a lower part temperature of the heat medium stored in the hot water tank, an upper part temperature sensor, provided in the hot water tank and provided higher than the lower part temperature sensor, that measures an upper part temperature of the heat medium stored in the hot water tank, and a controller that controls the first pump. In a case in which the upper part temperature is lower than a first boiling temperature, the controller executes a first boiling operation in which the first pump is operated at a first pump rotation frequency. In a case in which the upper part temperature is lower than a second boiling temperature that is higher than the first boiling temperature and the lower part temperature is lower than a third boiling temperature that is lower than the first boiling temperature, the controller executes a second boiling operation in which the first pump is operated at a second pump rotation frequency that is lower than the first pump rotation frequency.

### Advantageous Effects of Invention

With the water heater of an embodiment of the present invention, as the upper part temperature sensor and the lower part temperature sensor are provided, temperature distributions of the heat medium inside the hot water tank can be distinguished more accurately.

### Brief Description of Drawings

[Fig. 1] Fig. 1 is a schematic configuration diagram of a water heater 100 according to Embodiment 1.
[Fig. 2] Fig. 2 is a diagram explaining the configuration of a hot water tank 9 of the water heater 100 according to Embodiment 1.
[Fig. 3] Fig. 3 is a block diagram of control functions of the water heater 100 according to Embodiment 1.
[Fig. 4] Fig. 4 is a diagram explaining the action of a first boiling operation and a second boiling operation of the water heater 100 according to Embodiment 1.
[Fig. 5] Fig. 5 is a control flowchart of the water heater 100 according to Embodiment 1.
[Fig. 6] Fig. 6 is a table explaining the temperature of a hot water tank 9 when the first boiling operation starts and stops and the temperature of the hot water tank 9 when the second boiling operation starts and stops.
[Fig. 7] Fig. 7 is a table explaining control target values of actuators in the first boiling operation and control target values of the actuators in the second boiling operation.
[Fig. 8] Fig. 8 illustrates a temperature distribution of the hot water tank 9 when the first boiling operation starts.
[Fig. 9] Fig. 9 illustrates a temperature distribution of the hot water tank 9 when the temperature of the hot water tank 9 rises because of the first boiling operation.
[Fig. 10] Fig. 10 illustrates a temperature distribution of the hot water tank 9 when the first boiling operation ends.
[Fig. 11] Fig. 11 illustrates a temperature distribution of the hot water tank 9 when the second boiling operation starts.
[Fig. 12] Fig. 12 illustrates a temperature distribution of the hot water tank 9 when the temperature of the hot water tank 9 rises because of the second boiling operation.
[Fig. 13] Fig. 13 illustrates a temperature distribution of the hot water tank 9 when the second boiling operation ends.
[Fig. 14] Fig. 14 illustrates the flow of a heat medium in the hot water tank 9 during the first boiling operation.
[Fig. 15] Fig. 15 illustrates the flow of the heat medium in the hot water tank 9 during the second boiling operation.
[Fig. 16] Fig. 16 is a schematic configuration diagram of a modification of the water heater 100 according to Embodiment 1.
[Fig. 17] Fig. 17 is a block diagram of control functions of the modification of the water heater 100 according to Embodiment 1.
[Fig. 18] Fig. 18 is a schematic configuration diagram of a water heater 200 according to Embodiment 2.
[Fig. 19] Fig. 19 is a block diagram of control functions of the water heater 200 according to Embodiment 2.
[Fig. 20] Fig. 20 is a diagram explaining the action of the first boiling operation of the water heater 200 according to Embodiment 2.
[Fig. 21] Fig. 21 is a diagram explaining the action of the second boiling operation of the water heater 200 according to Embodiment 2.
[Fig. 22] Fig. 22 is a schematic configuration diagram of a water heater 300 according to Embodiment 3.
[Fig. 23] Fig. 23 is an explanatory diagram of the hot water tank 9 and an inflow pipe p8c of the water heater 300 according to Embodiment 3.
[Fig. 24] Fig. 24 is an enlarged view of the inflow pipe p8c illustrated in Fig. 23.
[Fig. 25] Fig. 25 illustrates an opening and closing mechanism 12 in the first boiling operation.
[Fig. 26] Fig. 26 illustrates the opening and closing mechanism 12 in the second boiling operation.

### Description of Embodiments

### Embodiment 1

Hereinafter, Embodiment 1 will be described with reference to the drawings. Note that, in the drawings illustrated below, the relative sizes of components may differ from actual sizes in some cases. Furthermore, the forms of the components expressed throughout the text of this specification are merely illustrative examples, and such forms of components are not limited to what are described.

### <Configuration of Embodiment 1>

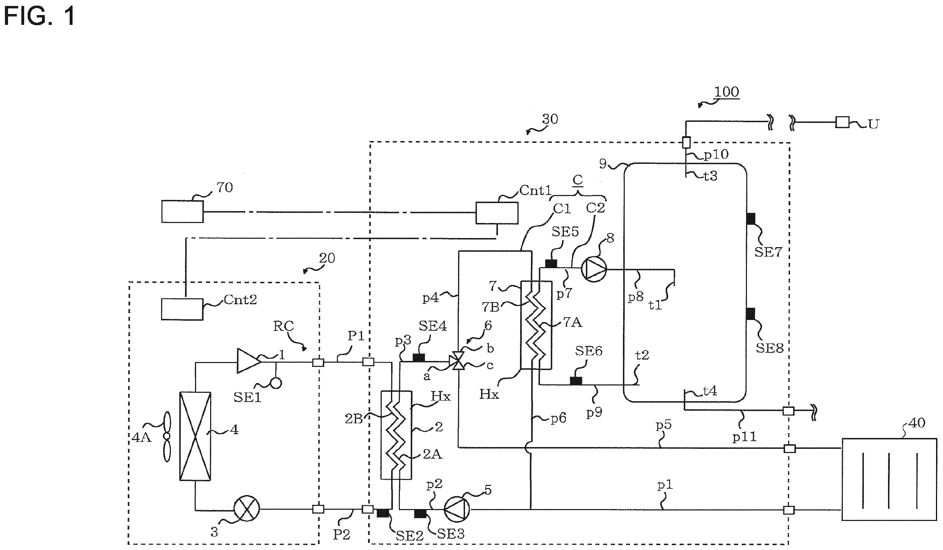

Fig. 1 is a schematic configuration diagram of the water heater 100 according to Embodiment 1. As illustrated in Fig. 1, the water heater 100 is provided with a heat pump unit 20, a tank unit 30, and a remote controller 70 that outputs control commands to the tank unit 30. The heat pump unit 20 and the tank unit 30 are joined through a gas pipe P1 and a liquid pipe P2. Also, the tank unit 30 is joined to the heating device 40 through a pipe p1 and a pipe p5. Examples of the heating device 40 include a flow heater and a radiator of an indoor unit of an air-conditioning apparatus.

The heat pump unit 20 is provided with a compressor 1 that compresses refrigerant, an expansion device 3 that decompresses refrigerant, a heat exchanger 4 that is used an evaporator, and a fan 4A that supplies air to the heat exchanger 4. Also, the heat pump unit 20 is provided with a pressure sensor SE1 that measures the pressure of refrigerant discharged from the compressor 1, and a controller Cnt2 that controls the compressor 1, the expansion device 3, and the fan 4A. Note that the compressor 1 and a first pump 8 as well as a second pump 5 described later are provided with an inverter. Also, the expansion device 3 is an expansion valve.

The tank unit 30 is provided with a heat medium circuit C that includes a primary circuit C1 and a secondary circuit C2 that receives heat from the primary circuit C1. A heat medium of the primary circuit C1 is water or brine. A heat medium of the secondary circuit C2 is water. The heat medium of the primary circuit C1 corresponds to a first heat medium, and the heat medium of the secondary circuit C2 corresponds to a second heat medium. Also, the tank unit 30 is provided with the hot water tank 9 that stores a heat medium, and the first pump 8 that conveys the heat medium to the hot water tank 9. Furthermore, the tank unit 30 is provided with heating heat exchangers Hx that each supply the heat of refrigerant generated by the heat pump unit 20 to the heat medium of the hot water tank 9. The heating heat exchangers Hx include a first heat exchanger 2 and a second heat exchanger 7. The tank unit 30 is provided with the first heat exchanger 2 that exchanges heat between refrigerant and a heat medium, and the second pump 5 that conveys the heat medium to the first heat exchanger 2. The first heat exchanger 2 is provided with a first heat medium flow 2A that allows the heat medium to flow and a refrigerant flow 2B that allows refrigerant to flow. The water heater 100 is provided with a refrigerant circuit RC in which the compressor 1, the first heat exchanger 2, the expansion device 3, and the heat exchanger 4 are provided. The refrigerant circuit RC can adopt a carbon dioxide refrigerant, an HFC refrigerant, an HC refrigerant, or an HFO refrigerant.

The tank unit 30 is provided with a flow switching device 6 that switches the flows of the heat medium in the primary circuit C1, and the second heat exchanger 7 that exchanges heat between the heat medium in the primary circuit C1 and the heat medium in the secondary circuit C2. The flow switching device 6 is provided with an inlet a joined to the first heat medium flow 2A, an outlet b joined to the second heat exchanger 7, and an outlet c joined to the heating device 40. The second heat exchanger 7 allows the heat medium in the primary circuit C1 to flow, and is provided with a second heat medium flow 7B joined to the outlet b and a third heat medium flow 7A that allows the heat medium in the secondary circuit C2 to flow.

The primary circuit C1 is provided with the pipe p1 that allows the heat medium flowing out from the heating device 40 to flow, a pipe p2 joined to a discharge part of the second pump 5, a pipe p3 joined to the first heat medium flow 2A, and a pipe p4 joined to the flow switching device 6. Also, the primary circuit C1 is provided with the pipe p5 through which the heat medium flowing into the heating device 40 flows, and a pipe p6 that returns the heat medium that has passed through the second heat exchanger 7 back to a suction part of the second pump 5. The secondary circuit C2 is provided with a pipe p7 joined to a suction part of the first pump 8. Also, the secondary circuit C2 is provided with an inflow pipe p8 that is connected to the hot water tank 9 and that allows the heat medium to flow from a discharge part of the first pump 8 to the hot water tank 9, and an outflow pipe p9 that is connected to the hot water tank 9 and that allows the heat medium to flow from the hot water tank 9 to the third heat medium flow 7A of the second heat exchanger 7.

The heat medium circuit C is provided with the following configuration besides the primary circuit C1 and the secondary circuit C2. The heat medium circuit C is provided with a tap pipe p10 that is connected to the hot water tank 9 and that supplies the heat medium to a use part U of the heat medium, and a pipe p11 that is connected to the hot water tank 9 and that is joined to a water service pipe for example. The use part U is a shower of a bathroom, a bathroom faucet, and a kitchen faucet. When the heat medium in the hot water tank 9 is consumed, the heat medium is supplied from the pipe p11. For this reason, the hot water tank 9 is ordinarily fully filled with the heat medium.

The tank unit 30 is provided with a temperature sensor SE2 that measures the temperature of refrigerant flowing out from the first heat exchanger 2, a temperature sensor SE3 that measures the temperature of a heat medium in the pipe p2, and a temperature sensor SE4 that measures the temperature of a heat medium in the pipe p3. The tank unit 30 is also provided with a temperature sensor SE5 that measures the temperature of a heat medium in the pipe p7 and a temperature sensor SE6 that measures the temperature of a heat medium in the outflow pipe p9. The tank unit 30 is further provided with a lower part temperature sensor SE8 that is provided in the hot water tank 9 and that measures a lower part temperature of a heat medium stored in the hot water tank 9, and an upper part temperature sensor SE7 that is provided in the hot water tank 9 and that measures an upper part temperature of a heat medium stored in the hot water tank 9. The upper part temperature sensor SE7 is provided higher than the lower part temperature sensor SE8. Furthermore, the tank unit 30 is provided with a controller Cnt1 that controls the first pump 8, the second pump 5, and the flow switching device 6. The controller Cnt1 communicates with the controller Cnt2.

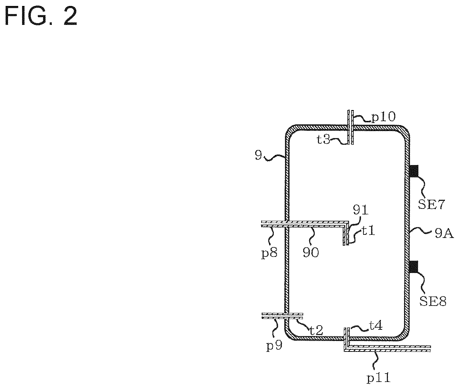

Fig. 2 is a diagram explaining the configuration of the hot water tank 9 of the water heater 100 according to Embodiment 1. The tap pipe p10 includes a first opening t3 provided inside the hot water tank 9. The inflow pipe p8 includes a second opening t1 provided inside the hot water tank 9. The second opening t1 is provided lower than the first opening t3 of the tap pipe p10. The inflow pipe p8 is provided with a horizontal part 90 that extends parallel to the horizontal plane and a vertical part 91 that extends parallel to the vertical direction. The upper end of the vertical part 91 is joined to one end of the horizontal part 90. Also, the second opening t1 is provided in the lower end of the vertical part 91. The outflow pipe p9 includes a third opening t2 provided inside the hot water tank 9. The third opening t2 is provided lower than the second opening t1 of the inflow pipe p8. In other words, in the space that stores the heat medium inside the hot water tank 9, the openings are provided in the following order from the top: the first opening t3, the second opening t1, and the third opening t2. The upper part temperature sensor SE7 is provided lower than the first opening t3 of the tap pipe p10 and higher than the second opening t1 of the inflow pipe p8. Also, the lower part temperature sensor SE8 is provided lower than the second opening t1 of the inflow pipe p8 and higher than the third opening t2 of the outflow pipe p9. The upper part temperature sensor SE7 and the lower part temperature sensor SE8 are fixed to a side face 9A of the hot water tank 9. The pipe p11 includes an opening t4 provided inside the hot water tank 9. The opening t4 is provided lower than the third opening t2.

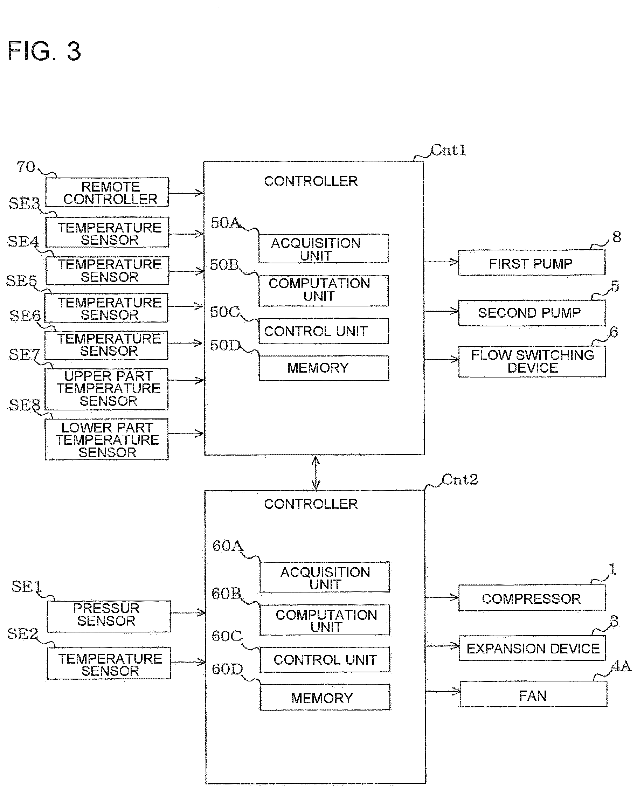

Fig. 3 is a block diagram of control functions of the water heater 100 according to Embodiment 1. The controller Cnt1 is provided with an acquisition unit 50A that acquires data from various sensors, a computation unit 50B that performs computations, a control unit 50C that controls actuators, and a memory 50D that stores data. The acquisition unit 50A acquires a control instruction from the remote controller 70, a temperature measured by the temperature sensor SE3, a temperature measured by the temperature sensor SE4, a temperature measured by the temperature sensor SE5, and a temperature measured by the temperature sensor SE6. Also, the acquisition unit 50A acquires a temperature measured by the upper part temperature sensor SE7 and a temperature measured by the lower part temperature sensor SE8. The computation unit 50B includes a first function of comparing the temperature measured by the upper part temperature sensor SE7 to a predetermined threshold value. Also, the computation unit 50B includes a second function of comparing the temperature measured by the lower part temperature sensor SE8 to a predetermined threshold value. By executing the first function and the second function, the computation unit 50B determines whether or not to execute a boiling operation. The control unit 50C controls the first pump 8, the second pump 5, and the flow switching device 6. The control unit 50C can acquire a control target value of the first pump 8 and a control target value of the second pump 5 from the memory 50D.

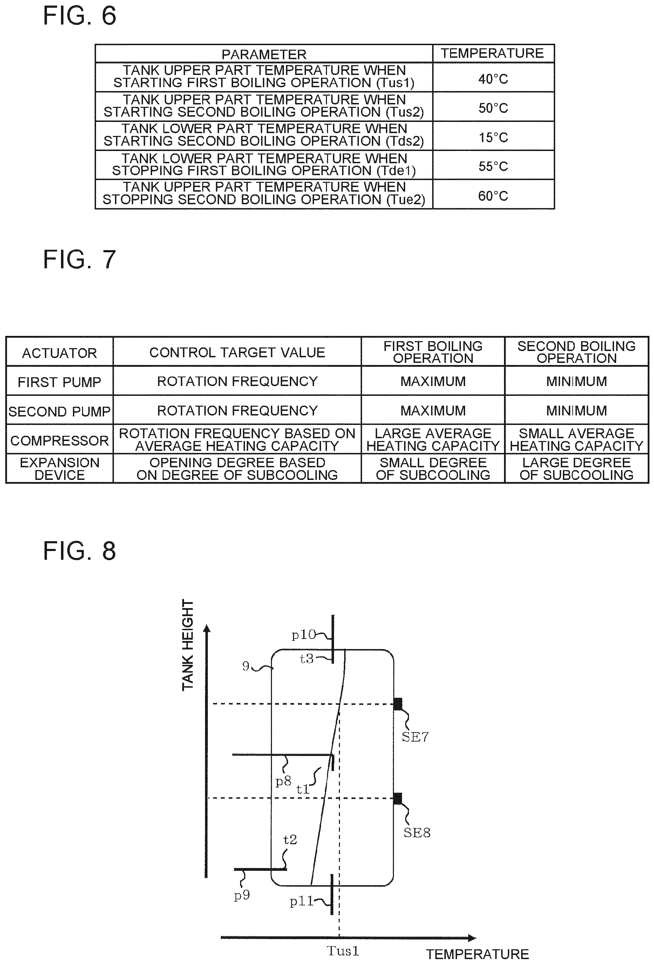

The controller Cnt2 is provided with an acquisition unit 60A that acquires data from various sensors, a computation unit 60B that performs computations, a control unit 60C that controls actuators, and a memory 60D that stores data. The acquisition unit 60A acquires a pressure measured by the pressure sensor SE1 and a temperature measured by the temperature sensor SE2. The computation unit 60B includes a function of computing a control target value of the compressor 1. Additionally, the computation unit 60B includes a function of computing a degree of subcooling of the first heat exchanger 2. The computation unit 60B computes a condensing temperature of refrigerant on the basis of the pressure measured by the pressure sensor SE1. Subsequently, from the difference between the computed condensing temperature and the temperature measured by the temperature sensor SE2, the computation unit 60B computes the degree of subcooling of the first heat exchanger 2. Also, the computation unit 60B includes a function of computing average heating capacities that determine the control target value of the compressor 1. The average heating capacities will be described later with reference to Fig. 7. The control unit 60C controls the compressor 1, the expansion device 3, and the fan 4A. The control unit 60C can acquire the control target value of the compressor 1 and a control target value of the expansion device 3 from the computation unit 60B.

Herein, the controller Cnt1 and the controller Cnt2 will be collectively referred to as the controller. Each functional unit is included in the controller that corresponds to dedicated hardware or a micro processing unit (MPU) that executes a program stored in a memory. In the case in which the controller is dedicated hardware, the controller corresponds to a single circuit, a composite circuit, an application specific integrated circuit (ASIC), a field-programmable gate array (FPGA), or a combination of the above, for example. Each of the functional units included in the controller may be discrete hardware, or a plurality of functional units may be a single piece of hardware. In the case in which the controller is an MPU, each function of the controller is executed by software, firmware, or a combination of software and firmware. The software and firmware is described as a program and stored in a memory. By reading out and executing the program stored in the memory, the MPU executes each function of the controller. The memory is a non-volatile or volatile semiconductor memory, such as a RAM, a ROM, a flash memory, an EPROM, and an EEPROM.

### <Action of Embodiment 1>

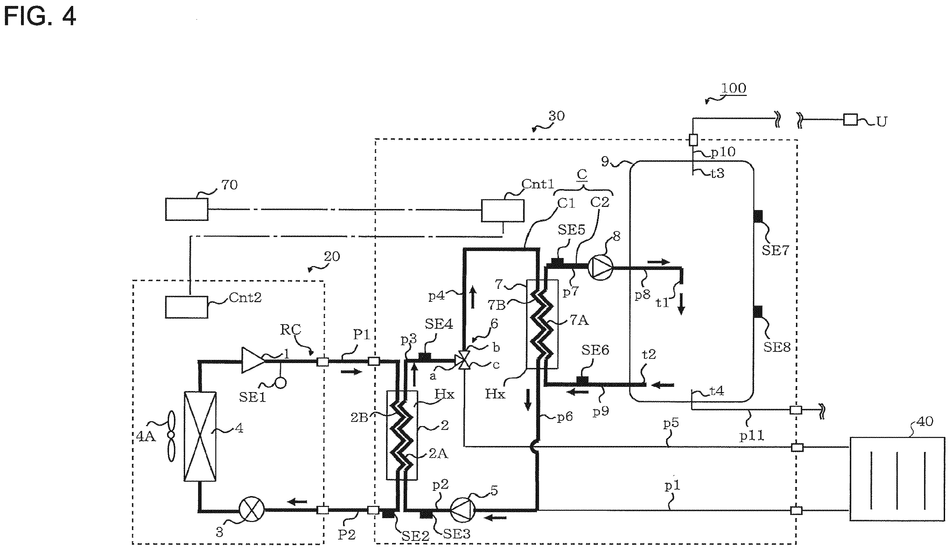

Fig. 4 is a diagram explaining the action of the first boiling operation and the second boiling operation of the water heater 100 according to Embodiment 1. The water heater 100 executes the first boiling operation that is executed when the hot water load is small, such as in the middle of the night, and the second boiling operation that is executed when the hot water load is large, such as in the evening and at night. As illustrated in Fig. 4, in the first boiling operation and the second boiling operation, the order in which refrigerant flows through components is the same, and the order in which a heat medium flows through components is also the same. First, the flow of the refrigerant will be described. The refrigerant is compressed by the compressor 1 and then discharged from the compressor 1. The refrigerant discharged from the compressor 1 flows into the refrigerant flow 2B and heats the heat medium in the first heat medium flow 2A. The refrigerant liquefies in the process of passing through the refrigerant flow 2B. The refrigerant flowing out from the first heat medium flow 2A is decompressed by the expansion device 3. The refrigerant decompressed by the expansion device 3 is brought into a two-phase gas-liquid state. The refrigerant flowing out from the expansion device 3 flows into the heat exchanger 4 and absorbs heat from air. The refrigerant gasifies in the process of passing through the heat exchanger 4.

Next, the flow of the heat medium in the primary circuit C1 will be described. The heat medium is pressurized by the second pump 5 and discharged from the second pump 5. The heat medium discharged from the second pump 5 flows into the first heat medium flow 2A through the pipe p2, and is heated by the refrigerant. The heat medium flowing out from the first heat medium flow 2A flows into the flow switching device 6 through the pipe p3. The heat medium flows from the inlet a to the outlet b. Note that because a heating load is not generated in the heating device 40, the outlet c is closed. For this reason, the heat medium does not flow from the inlet a to the outlet c. The heat medium flowing out from the outlet b flows into the second heat medium flow 7B through the pipe p4, and heats the heat medium in the third heat medium flow 7A of the primary circuit C1. The heat medium flowing out from the second heat medium flow 7B returns to the second pump 5 through the pipe p6 and the pipe p1.

Next, the flow of the heat medium in the secondary circuit C2 will be described. The heat medium is pressurized by the first pump 8 and discharged from the first pump 8. The heat medium discharged from the first pump 8 flows into the hot water tank 9 through the inflow pipe p8. The heat medium in the hot water tank 9 flows into the third heat medium flow 7A through the outflow pipe p9, and is heated by the heat medium in the second heat medium flow 7B of the primary circuit C1. The heat medium flowing out from the third heat medium flow 7A returns to the first pump 8 through the pipe p7.

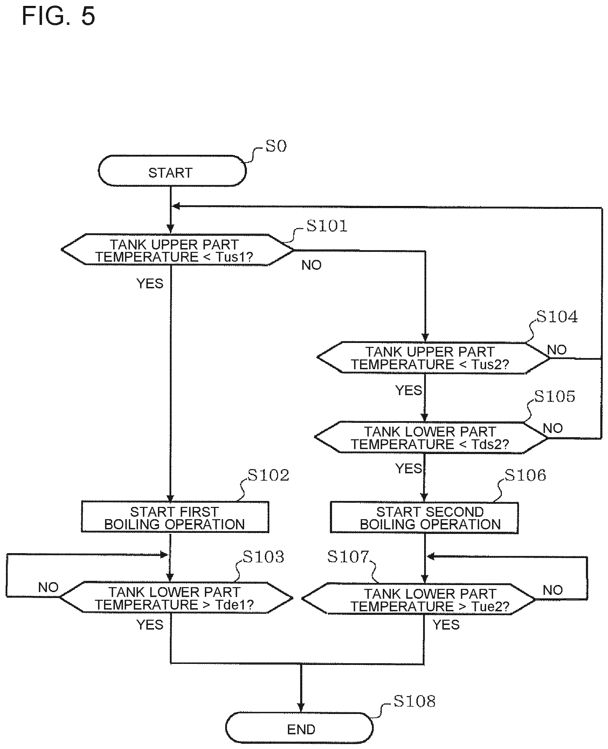

Fig. 5 is a control flowchart of the water heater 100 according to Embodiment 1. Fig. 6 is a table explaining the temperature of the hot water tank 9 when the first boiling operation starts and stops and the temperature of the hot water tank 9 when the second boiling operation starts and stops. The controller Cnt1 starts the control flow related to the first boiling operation and the second boiling operation (step S0). This control flow is started at intervals of a predetermined time. The controller Cnt1 determines whether or not the temperature measured by the upper part temperature sensor SE7 is lower than a first boiling temperature Tus1 (step S101). Herein, as illustrated in Fig. 6, the first boiling temperature Tus1 is 40 degrees C for example. In the case in which the temperature measured by the upper part temperature sensor SE7 is lower than the first boiling temperature Tus1, the controller Cnt1 executes the first boiling operation (step S102). In other words, the controller Cnt1 starts the operation of the first pump 8 and the second pump 5, and in addition, the controller Cnt1 outputs to the controller Cnt2 an instruction to start the operation of actuators such as the compressor 1. The controller Cnt2 acquiring the instruction from the controller Cnt1 starts the operation of the compressor 1 and the fan 4A. Subsequently, the controller Cnt1 determines whether or not the temperature measured by the lower part temperature sensor SE8 is higher than a first stopping temperature Tde1 (step S103). Herein, as illustrated in Fig. 6, the first stopping temperature Tde1 is 55 degrees C for example. In the case in which the temperature measured by the lower part temperature sensor SE8 is higher than the first stopping temperature Tde1, the controller Cnt1 stops the first pump 8 and the second pump 5, and the controller Cnt2 stops the compressor 1 and the fan 4A (step S108).

In step S101, in the case in which the temperature measured by the upper part temperature sensor SE7 is higher than or equal to the first boiling temperature Tus1, the controller Cnt1 proceeds to step S104. In step S104, the controller Cnt1 determines whether or not the temperature measured by the upper part temperature sensor SE7 is lower than a second boiling temperature Tus2. Herein, as illustrated in Fig. 6, the second boiling temperature Tus2 is higher than the first boiling temperature Tus1, and is 50 degrees C for example. In the case in which the temperature measured by the upper part temperature sensor SE7 is lower than the second boiling temperature Tus2, the controller Cnt1 determines whether or not the temperature measured by the lower part temperature sensor SE8 is lower than a third boiling temperature Tds2 (step S105). Herein, as illustrated in Fig. 6, the third boiling temperature Tds2 is lower than the first boiling temperature Tus1 and the second boiling temperature Tus2, and is 15 degrees C for example. In the case in which the temperature measured by the lower part temperature sensor SE8 is lower than the third boiling temperature Tds2, the controller Cnt1 executes the second boiling operation (step S106). In other words, the controller Cnt1 starts the operation of the first pump 8 and the second pump 5, and in addition, the controller Cnt1 outputs to the controller Cnt2 an instruction to start the operation of actuators such as the compressor 1. The controller Cnt2 acquiring the instruction from the controller Cnt1 starts the operation of the compressor 1 and the fan 4A. Subsequently, the controller Cnt1 determines whether or not the temperature measured by the upper part temperature sensor SE7 is higher than a second stopping temperature Tue2 (step S107). Herein, as illustrated in Fig. 6, the second stopping temperature Tue2 is higher than the first stopping temperature Tde1, and is 60 degrees C for example. In the case in which the temperature measured by the upper part temperature sensor SE7 is higher than the second stopping temperature Tue2, the controller Cnt1 stops the first pump 8 and the second pump 5, and the controller Cnt2 stops the compressor 1 and the fan 4A (step S108).

Fig. 7 is a table explaining control target values of actuators in the first boiling operation and control target values of the actuators in the second boiling operation. The control target values of the actuators in the first boiling operation are defined as follows. Namely, the control target value of the first pump 8 is defined as a pump rotation frequency x1, the control target value of the second pump 5 is defined as a pump rotation frequency x2, the control target value of the compressor 1 is defined as a compressor rotation frequency x3, and the control target value of the expansion device 3 is defined as an opening degree x4. Note that the pump rotation frequency x1 corresponds to a first pump rotation frequency. The pump rotation frequency x2 corresponds to a third pump rotation frequency. The pump rotation frequency x1 and the pump rotation frequency x2 are predetermined rotation frequencies. The pump rotation frequency x1 and the pump rotation frequency x2 are stored in the memory 50D. As illustrated in Fig. 7, the pump rotation frequency x1 is for example the maximum rotation frequency of the first pump 8. The pump rotation frequency x2 is for example the maximum rotation frequency of the second pump 5.

A first average heating capacity is defined as a value obtained by dividing the amount of increased heat in the hot water tank 9 from the start to the end of the first boiling operation, by the amount of time from the start to the end of the first boiling operation. Also, a second average heating capacity is defined as a value obtained by dividing the amount of increased heat in the hot water tank 9 from the start to the end of the second boiling operation, by the amount of time from the start to the end of the second boiling operation. Herein, in the case in which the temperature conditions in the first boiling operation and the temperature conditions in the second boiling operation are the same, the compressor rotation frequency x3 is predetermined in such a manner that the first average heating capacity is greater than the second average heating capacity. The temperature conditions are the outdoor air temperature and the tap water temperature for example.

Also, a first degree of subcooling is defined as the degree of subcooling of the first heat exchanger 2 in the first boiling operation, and a second degree of subcooling is defined as the degree of subcooling of the first heat exchanger 2 in the second boiling operation. Herein, the computation unit 60B computes the first degree of subcooling and the second degree of subcooling. Also, a first target degree of subcooling for the first boiling operation and a second target degree of subcooling for the second boiling operation are stored in the memory 60D. Herein, the first target degree of subcooling is smaller than the second target degree of subcooling. The opening degree x4 is defined in such a manner that the first degree of subcooling is smaller than the second degree of subcooling.

The control target values of the actuators in the second boiling operation can be described in much the same manner as the control target values of the actuators in the first boiling operation as above. The points of the control target values of the actuators in the second boiling operation that differ from the control target values of the actuators in the first boiling operation will be described. The control target values of the actuators in the second boiling operation are defined as follows. The control target value of the first pump 8 is defined as a pump rotation frequency y1, the control target value of the second pump 5 is defined as a pump rotation frequency y2, the control target value of the compressor 1 is defined as a compressor rotation frequency y3, and the control target value of the expansion device 3 is defined as an opening degree y4. Note that the pump rotation frequency y1 corresponds to a second pump rotation frequency. The pump rotation frequency y2 corresponds to a fourth pump rotation frequency. As illustrated in Fig. 7, the pump rotation frequency y1 is for example the minimum rotation frequency of the first pump 8. The pump rotation frequency y2 is for example the minimum rotation frequency of the second pump 5. Also, the compressor rotation frequency y3 is defined in such a manner that the first average heating capacity is greater than the second average heating capacity. The opening degree y4 is defined in such a manner that the first degree of subcooling is smaller than the second degree of subcooling.

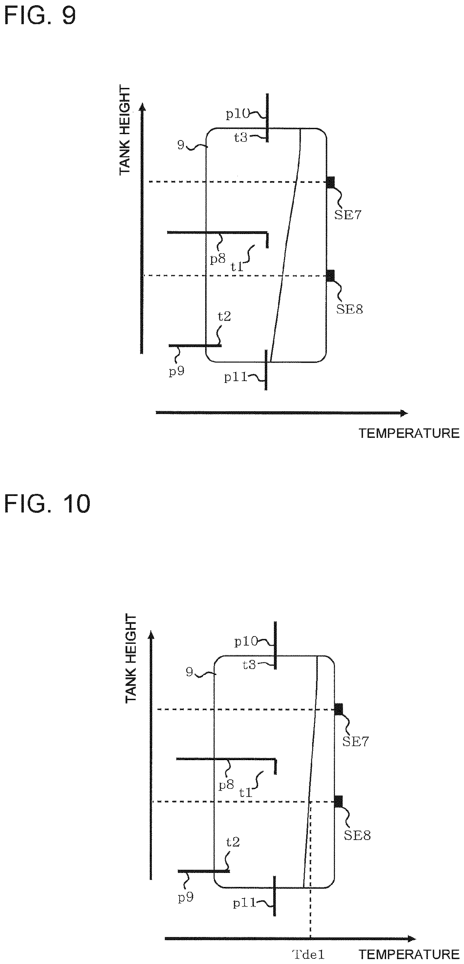

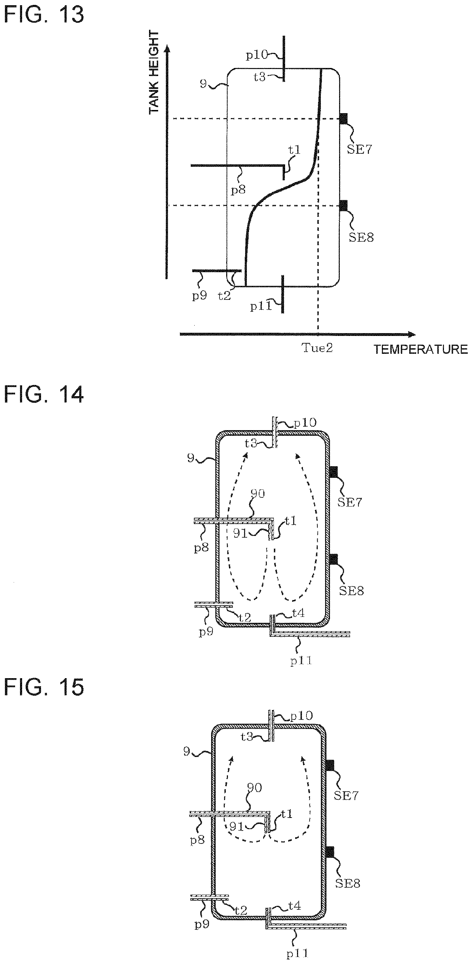

Fig. 8 illustrates a temperature distribution of the hot water tank 9 when the first boiling operation starts. Fig. 9 illustrates a temperature distribution of the hot water tank 9 when the temperature of the hot water tank 9 rises because of the first boiling operation. Fig. 10 illustrates a temperature distribution of the hot water tank 9 when the first boiling operation ends. As illustrated in Fig. 8, in the case in which the temperature of the heat medium in the hot water tank 9 has fallen because of heat dissipation from the hot water tank 9, the temperature of the heat medium in the hot water tank 9 rises gently from the lower part to the upper part of the hot water tank 9. In other words, the difference between the temperature of the heat medium in the upper part of the hot water tank 9 and the temperature of the heat medium in the lower part of the hot water tank 9 is small. In Fig. 8, the temperature measured by the upper part temperature sensor SE7 is lower than the first boiling temperature Tus1. Consequently, the water heater 100 executes the first boiling operation. As illustrated in Fig. 9, when the water heater 100 executes the first boiling operation, the heated heat medium flows into the hot water tank 9 from the inflow pipe p8. In the first boiling operation, the heated heat medium spreads throughout the hot water tank 9 as explained in Fig. 14 described later. As a result, the overall temperature of the heat medium in the hot water tank 9 rises. As illustrated in Fig. 10, when the water heater 100 continues the first boiling operation, the overall temperature of the heat medium in the hot water tank 9 rises further. In Fig. 10, the temperature measured by the lower part temperature sensor SE8 exceeds the first stopping temperature Tde1. Consequently, the water heater 100 ends the first boiling operation.

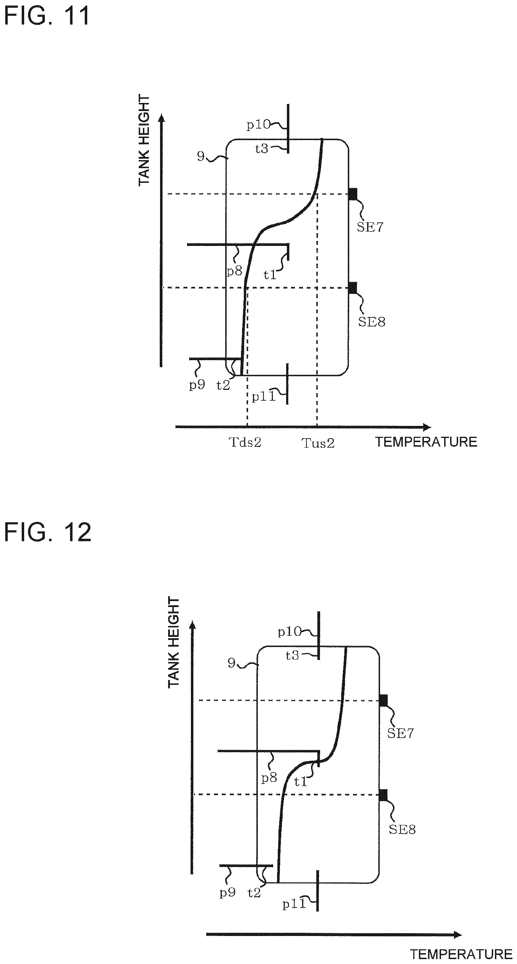

Fig. 11 illustrates a temperature distribution of the hot water tank 9 when the second boiling operation starts. Fig. 12 illustrates a temperature distribution of the hot water tank 9 when the temperature of the hot water tank 9 rises because of the second boiling operation. Fig. 13 illustrates a temperature distribution of the hot water tank 9 when the second boiling operation ends. As illustrated in Fig. 11, in the case in which the temperature of the heat medium in the hot water tank 9 has fallen because of an increase in the amount of hot water used, the temperature of the heat medium in the hot water tank 9 rises sharply from the lower part to the upper part of the hot water tank 9. In other words, the difference between the temperature of the heat medium in the upper part of the hot water tank 9 and the temperature of the heat medium in the lower part of the hot water tank 9 is large. The location where the temperature of the heat medium rises sharply corresponds to a temperature stratification of the hot water tank 9. In Fig. 11, the temperature measured by the upper part temperature sensor SE7 is lower than the second boiling temperature Tus2, and additionally, the temperature measured by the lower part temperature sensor SE8 is lower than the third boiling temperature Tds2. Consequently, the water heater 100 executes the second boiling operation. In the second boiling operation, the heated heat medium is supplied mainly to the upper part of the hot water tank 9 as explained in Fig. 15 described later. As a result, the temperature of the heat medium in the upper part of the hot water tank 9 rises. As illustrated in Fig. 13, when the water heater 100 continues the second boiling operation, the temperature of the heat medium in the upper part of the hot water tank 9 rises further. In Fig. 13, the temperature measured by the upper part temperature sensor SE7 exceeds the second stopping temperature Tue2. Consequently, the water heater 100 ends the second boiling operation.

Fig. 14 illustrates the flow of the heat medium in the hot water tank 9 during the first boiling operation. The flow rate of the heat medium flowing into the hot water tank 9 from the second opening t1 in the first boiling operation is higher than is that in the second boiling operation as the rotation frequency of the first pump 8 in the first boiling operation is higher than the rotation frequency of the first pump 8 in the second boiling operation. For this reason, the heat medium flowing into the hot water tank 9 from the second opening t1 flows to the lower part of the hot water tank 9, and subsequently, flows to the upper part of the hot water tank 9 by buoyant force. In this manner, in the first boiling operation, because the heated heat medium flows through the entire hot water tank 9, the heated heat medium spreads throughout the hot water tank 9. As a result, the overall temperature of the heat medium in the hot water tank 9 rises.

Fig. 15 illustrates the flow of the heat medium in the hot water tank 9 during the second boiling operation. The temperature at the outlet of the first heat medium flow 2A rises in the second boiling operation more easily than does that in the first boiling operation as the rotation frequency of the second pump 5 in the second boiling operation is lower than the rotation frequency of the second pump 5 in the first boiling operation. For this reason, in the second boiling operation, the high-temperature heat medium is supplied to the second heat medium flow 7B. Consequently, because the rotation frequency of the first pump 8 in the second boiling operation is lower than the rotation frequency of the first pump 8 in the first boiling operation, and in addition, the high-temperature heat medium is supplied to the second heat medium flow 7B, the temperature at the outlet of the third heat medium flow 7A also rises easily. In other words, the buoyant force works more strongly as the heat medium flowing into the hot water tank 9 from the third heat medium flow 7A is at a high temperature. Furthermore, the flow rate of the heat medium flowing into the hot water tank 9 from the second opening t1 in the second boiling operation is lower than is that in the first boiling operation as the rotation frequency of the first pump 8 in the second boiling operation is lower than the rotation frequency of the first pump 8 in the first boiling operation. Because the heat medium flowing into the hot water tank 9 from the second opening t1 in the second boiling operation is subjected to a stronger buoyant force and the flow rate is also low, the heat medium flowing into the hot water tank 9 from the second opening t1 in the second boiling operation flows to the upper part of the hot water tank 9 without flowing to the lower part of the hot water tank 9. As a result, the temperature of the heat medium in the upper part of the hot water tank 9 rises. In other words, the temperature of the heat medium in the upper part of the hot water tank 9 in the second boiling operation more easily rises than does the temperature of the heat medium in the upper part of the hot water tank 9 in the first boiling operation. Note that the heat medium in the lower part of the hot water tank 9, whose rise in temperature is reduced, in the second boiling operation flows out of the hot water tank 9 from the outflow pipe p9.

### <Effects of Embodiment 1>

The water heater 100 is provided with the upper part temperature sensor SE7 and the lower part temperature sensor SE8. For this reason, the controller Cnt1 can distinguish more accurately between the first temperature distribution in which the temperature of the heat medium in the hot water tank 9 has fallen because of heat dissipation from the hot water tank 9, and the second temperature distribution in which the temperature of the heat medium in the hot water tank 9 has fallen because of an increase in the amount of hot water used.

The temperature in the upper part of the hot water tank 9 when the temperature of the heat medium in the hot water tank 9 has fallen because of heat dissipation from the hot water tank 9 tends to be low compared to the temperature in the upper part of the hot water tank 9 when the temperature of the heat medium in the hot water tank 9 has fallen because of an increase in the amount of hot water used. Consequently, the first boiling temperature Tus1, which is the threshold value for starting the first boiling operation, is lower than the second boiling temperature Tus2, which is the threshold value for starting the second boiling operation. For this reason, the controller Cnt1 can distinguish more accurately between the first temperature distribution and the second temperature distribution.

Also, in a situation in which the temperature of the heat medium in the hot water tank 9 has fallen because of an increase in the amount of hot water used, a temperature stratification is formed in the hot water tank 9, and the temperature of the heat medium in the lower part of the hot water tank 9 is approximately the same as the temperature of tap water supplied from the pipe p11. Consequently, the threshold value for starting the second boiling operation includes the third boiling temperature Tds2, which is the threshold value of the temperature of the heat medium in the lower part of the hot water tank 9. For this reason, the controller Cnt1 can distinguish more accurately between the first temperature distribution and the second temperature distribution.

As described above, the controller Cnt1 can distinguish more accurately between the first temperature distribution and the second temperature distribution. For this reason, when the temperature of the heat medium in the hot water tank 9 has fallen because of an increase in the amount of hot water used, the controller Cnt1 can execute the second boiling operation more reliably. In other words, in a situation in which the day is coming to the end, such as in the evening and at night, when the water heater 100 boils all of the heat medium in the hot water tank 9, there is an increased possibility that some hot water will be unused. However, because the controller Cnt1 can execute the second boiling operation more reliably, the possibility that some hot water will be unused can be reduced. In other words, as the possibility that some hot water will be unused can be reduced, the water heater 100 is capable of reducing power consumption.

Also, when the temperature of the heat medium in the hot water tank 9 has fallen because of heat dissipation from the hot water tank 9, the controller Cnt1 can execute the first boiling operation more reliably. In other words, the water heater 100 can boil all of the heat medium while the total amount of heat in the hot water tank 9 has decreased greatly but the hot water load is small, such as during the middle of the night.

Even when the amount of the high-temperature heat medium in the hot water tank 9 can be secured to some extent, in a situation where the amount of the heat medium in the hot water tank 9, which is being used, increases, such as in the evening and at night, there is a possibility of running out of the high-temperature heat medium in the hot water tank 9. In the determination of whether to start the second boiling operation, the controller Cnt1 uses the second boiling temperature Tus2, which is higher than the first boiling temperature Tus1. Consequently, the controller Cnt1 may execute the second boiling operation even in a state in which the heat medium in the upper part of the hot water tank 9 is at a high temperature, or in other words, a state in which the amount of the high-temperature heat medium in the hot water tank 9 can be secured to some extent. With this arrangement, in a situation in which the amount of the heat medium in the hot water tank 9, which is being used, increases, such as in the evening and at night, a state in which the water heater 100 becomes unable to supply the high-temperature heat medium to the use part U can be avoided.

While the controller Cnt1 is executing the first boiling operation, when the temperature measured by the lower part temperature sensor SE8 becomes higher than the first stopping temperature Tde1, the controller Cnt1 stops the first pump 8. In other words, to determine whether to end the first boiling operation, the controller Cnt1 uses the lower part temperature sensor SE8 rather than the upper part temperature sensor SE7. At this point, the temperature of the heat medium in the lower part of the hot water tank 9 is lower than the temperature of the heat medium in the upper part of the hot water tank 9. For this reason, by having the controller Cnt1 use the lower part temperature sensor SE8 to determine whether to end the first boiling operation, the water heater 100 can boil all of the heat medium in the hot water tank 9 more reliably.

While the controller Cnt1 is executing the second boiling operation, when the temperature measured by the upper part temperature sensor SE7 becomes higher than the second stopping temperature Tue2, the controller Cnt1 stops the first pump 8. In other words, to determine whether to end the second boiling operation, the controller Cnt1 uses the upper part temperature sensor SE7 rather than the lower part temperature sensor SE8. At this point, in the second boiling operation, the heated heat medium flows to the upper part of the hot water tank 9. For this reason, by having the controller Cnt1 use the upper part temperature sensor SE7 to determine whether to end the second boiling operation, the water heater 100 can boil the heat medium in the upper part of the hot water tank 9 more reliably.

Also, the second stopping temperature Tue2 is higher than the first stopping temperature Tde1. Herein, as explained in Fig. 15, the temperature of the heat medium in the upper part of the hot water tank 9 in the second boiling operation more easily rises than does the temperature of the heat medium in the upper part of the hot water tank 9 in the first boiling operation. For this reason, hypothetically, if the second stopping temperature Tue2 is lower than or equal to the first stopping temperature Tde1, there is an increased possibility that the controller Cnt1 will end the second boiling operation even when the amount of the boiled heat medium is not much. For this reason, because the second stopping temperature Tue2 is higher than the first stopping temperature Tde1, the water heater 100 can ensure the boiled heat medium in the second boiling operation.

In the first boiling operation, the controller Cnt1 sets the rotation frequency of not only the first pump 8 but also the second pump 5 to the maximum rotation frequency for example. In other words, the rotation frequency of the first pump 8 in the first boiling operation is higher than the rotation frequency of the first pump 8 in the second boiling operation, and additionally, the rotation frequency of the second pump 5 in the first boiling operation is higher than the rotation frequency of the second pump 5 in the second boiling operation. In this manner, the controller Cnt1 also increases the flow rate of the heat medium in the primary circuit C1 depending on the increase in the flow rate of the heat medium in the secondary circuit C2. With this arrangement, the heat exchange efficiency in the first heat exchanger 2 and the heat exchange efficiency in the second heat exchanger 7 are improved.

The upper part temperature sensor SE7 is provided lower than the first opening t3 of the tap pipe p10 and higher than the second opening t1 of the inflow pipe p8. Also, the lower part temperature sensor SE8 is provided lower than the second opening t1 of the inflow pipe p8 and higher than the third opening t2 of the outflow pipe p9. For this reason, the upper part temperature sensor SE7 is easily positioned above the temperature stratification of the hot water tank 9, and the lower part temperature sensor SE8 is easily positioned below the temperature stratification of the hot water tank 9. Consequently, the controller Cnt1 can distinguish more accurately between the first temperature distribution and the second temperature distribution.

The controller Cnt1 controls the compressor 1 in such a manner that the second average heating capacity is smaller than the first average heating capacity. In the second boiling operation, the rotation frequency of the second pump 5 is reduced, and is set to the minimum rotation frequency for example. In other words, in the second boiling operation, the flow rate of the heat medium in the primary circuit C1 is reduced. With this arrangement, the amount of heat exchange in the first heat exchanger 2 falls, and the condensing temperature of refrigerant in the first heat exchanger 2 rises. Consequently, by having the controller Cnt1 reduce the rotation frequency of the compressor 1 in the second boiling operation, the water heater 100 can keep the discharge pressure of the compressor 1 from rising extremely.

The controller Cnt1 controls the expansion device 3 in such a manner that the second degree of subcooling during the second boiling operation is greater than the first degree of subcooling during the first boiling operation. In the second boiling operation, the rotation frequency of the second pump 5 is reduced, and is set to the minimum rotation frequency for example. Because the flow rate of the heat medium flowing into the first heat exchanger 2 is reduced, the difference between the inlet temperature of the heat medium in the first heat exchanger 2 and the outlet temperature of the heat medium in the first heat exchanger 2 tends to increase. For this reason, the controller Cnt1 increases the degree of subcooling of the first heat exchanger 2 in the second boiling operation. With this arrangement, the outlet temperature of refrigerant in the first heat exchanger 2 falls further. In other words, the difference between the inlet temperature of refrigerant in the first heat exchanger 2 and the outlet temperature of refrigerant in the first heat exchanger 2 increases. With this arrangement, the heat exchange efficiency between refrigerant and a heat medium in the first heat exchanger 2 is improved.

### <Modification of Embodiment 1>

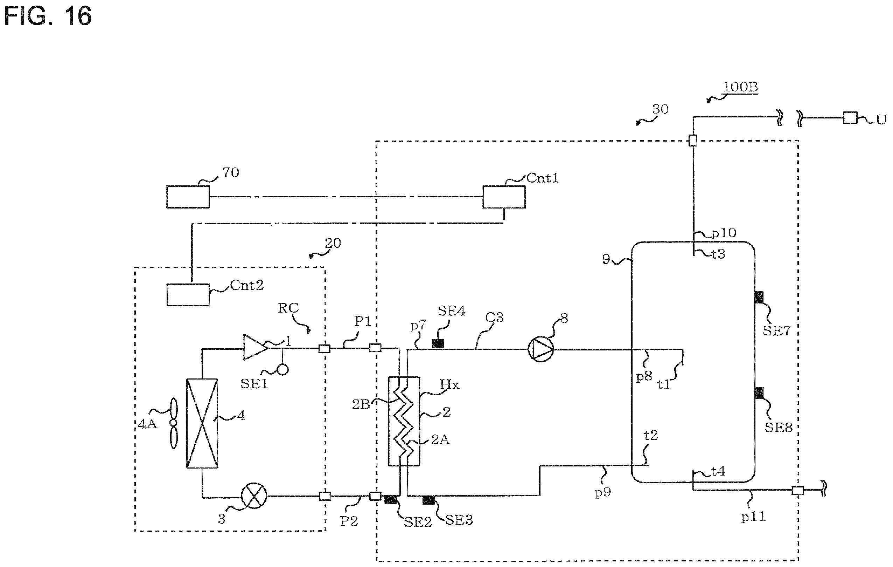

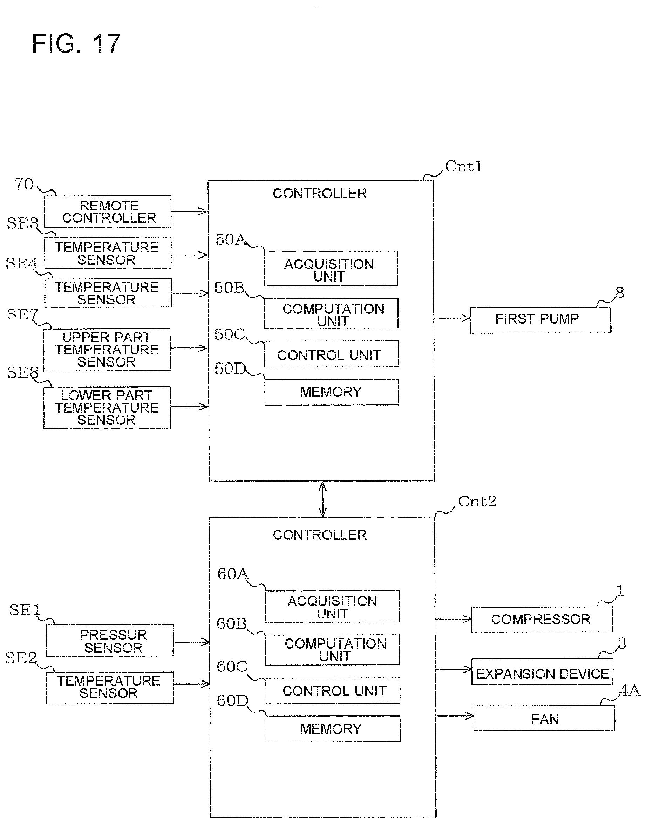

Fig. 16 is a schematic configuration diagram of a modification of the water heater 100 according to Embodiment 1. Fig. 17 is a block diagram of control functions of the modification of the water heater 100 according to Embodiment 1. The heat medium circuit C of the tank unit 30 of the water heater 100 is provided with the primary circuit C1 and the secondary circuit C2. A heat medium circuit C3 of the tank unit 30 of a water heater 100B according to the modification is not provided with a plurality of circuits. In other words, whereas the heat medium circuit C is provided with the first heat exchanger 2 and the first pump 8, the heat medium circuit C3 is not provided with the second pump 5, the flow switching device 6, and the second heat exchanger 7. Even with the water heater 100B, action and effects similar to the water heater 100 according to Embodiment 1 can be obtained.

### Embodiment 2

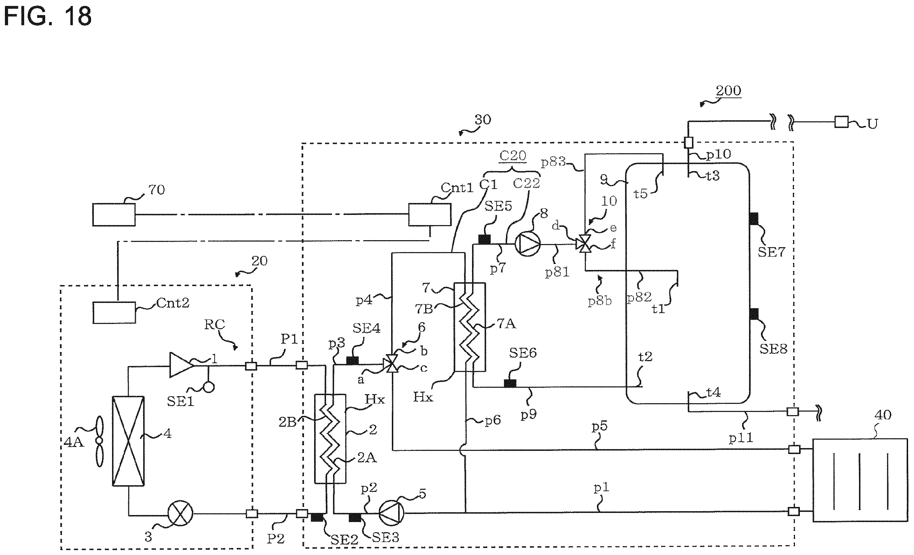

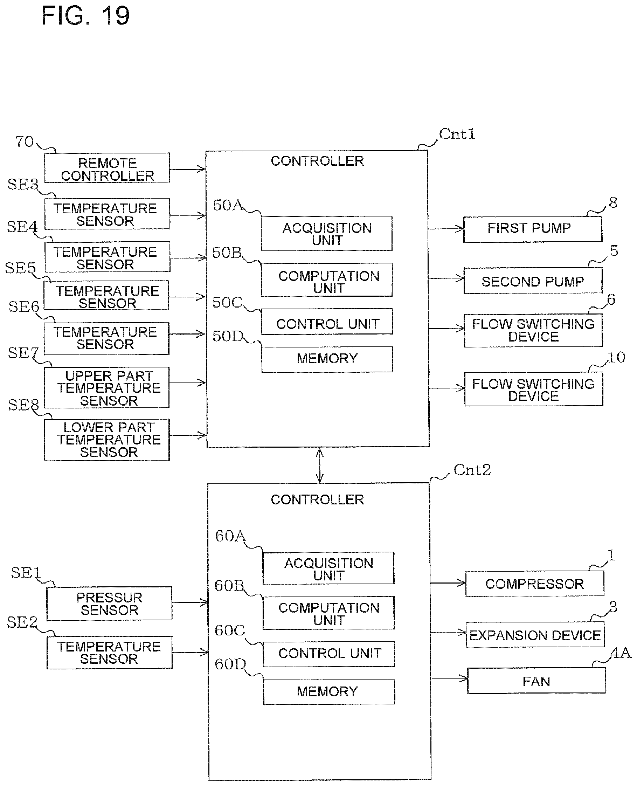

In Embodiment 2, the points that differ from Embodiment 1 will be described mainly. Components that are the same will be denoted with the same reference signs, and a description of such components will be omitted. Fig. 18 is a schematic configuration diagram of a water heater 200 according to Embodiment 2. Fig. 19 is a block diagram of control functions of the water heater 200 according to Embodiment 2.

### <Configuration of Embodiment 2>

A secondary circuit C22 of a heat medium circuit C20 of the water heater 200 is provided with a flow switching device 10 that switches the flows of the heat medium. Also, an inflow pipe p8b of the secondary circuit C22 is provided with a first inflow pipe p82 that is connected to the hot water tank 9 and through which the heat medium flows during the first boiling operation, and a second inflow pipe p83 that is connected to the hot water tank 9 and through which the heat medium flows during the second boiling operation. The flow switching device 10 is provided with an inlet d joined to the discharge part of the first pump 8, a first outlet f joined to the hot water tank 9 through the first inflow pipe p82, and a second outlet e joined to the hot water tank 9 through the second inflow pipe p83. The first inflow pipe p82 has a configuration similar to the inflow pipe p8 described in Embodiment 1. The second inflow pipe p83 includes a fourth opening t5 provided inside the hot water tank 9. The second opening t1 of the first inflow pipe p82 is provided lower than the first opening t3 of the tap pipe p10 and the fourth opening t5 of the second inflow pipe p83. Also, the third opening t2 of the outflow pipe p9 is provided lower than the second opening t1 of the first inflow pipe p82. As illustrated in Fig. 19, the control unit 50C of the controller Cnt1 controls the flow switching device 10 in addition to the first pump 8, the second pump 5, and the flow switching device 6.

### <Action of Embodiment 2>

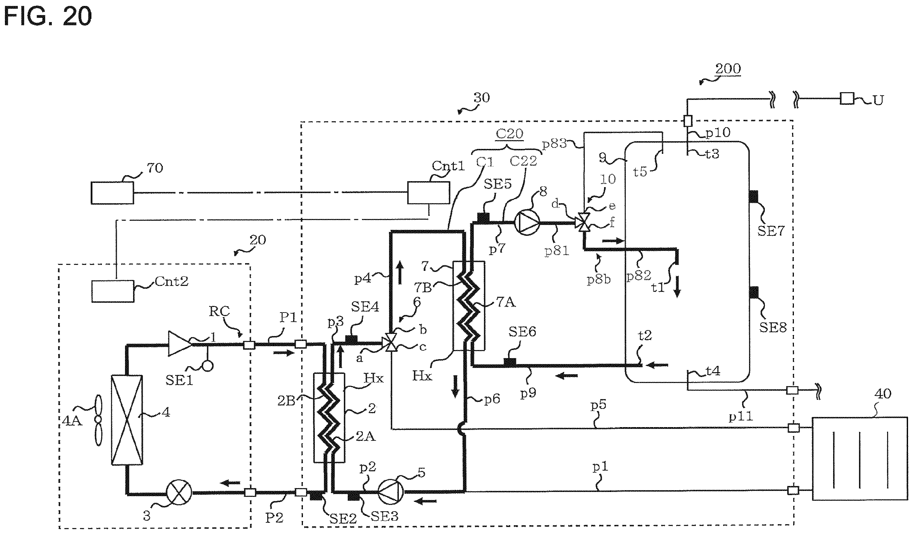

Fig. 20 is a diagram explaining the action of the first boiling operation of the water heater 200 according to Embodiment 2.

The controller Cnt1 opens the first outlet f of the flow switching device 10 and also closes the second outlet e of the flow switching device 10. Consequently, the heat medium in the secondary circuit C22 flows into the hot water tank 9 through the first pump 8, the inlet d, the first outlet f, and the first inflow pipe p82.

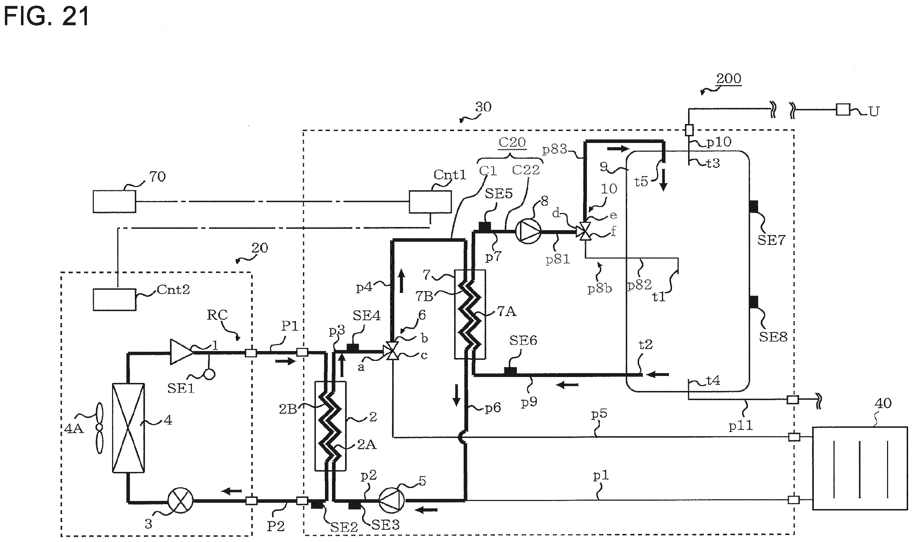

Fig. 21 is a diagram explaining the action of the second boiling operation of the water heater 200 according to Embodiment 2.

The controller Cnt1 closes the first outlet f of the flow switching device 10 and also opens the second outlet e of the flow switching device 10. Consequently, the heat medium in the secondary circuit C22 flows into the hot water tank 9 through the first pump 8, the inlet d, the second outlet e, and the second inflow pipe p83.

### <Effects of Embodiment 2>

The fourth opening t5 of the second inflow pipe p83 is provided higher than the second opening t1 of the first inflow pipe p82. In other words, the fourth opening t5 of the second inflow pipe p83 is provided in the upper part inside the hot water tank 9. For this reason, the fourth opening t5 of the second inflow pipe p83 is positioned above the temperature stratification. Consequently, in the second boiling operation, the heated heat medium flows from the fourth opening t5 into the portion of the hot water tank 9 higher than the temperature stratification. Additionally, the higher the temperature of the heat medium flowing into the portion above the temperature stratification, the more the heat medium is prevented from flowing downward. Consequently, the water heater 200 can maintain the temperature stratification in the hot water tank 9 more reliably. In other words, the water heater 200 can reduce a lowering of the temperature of the heat medium to be used for hot water that is positioned higher than the temperature stratification.

### Embodiment 3

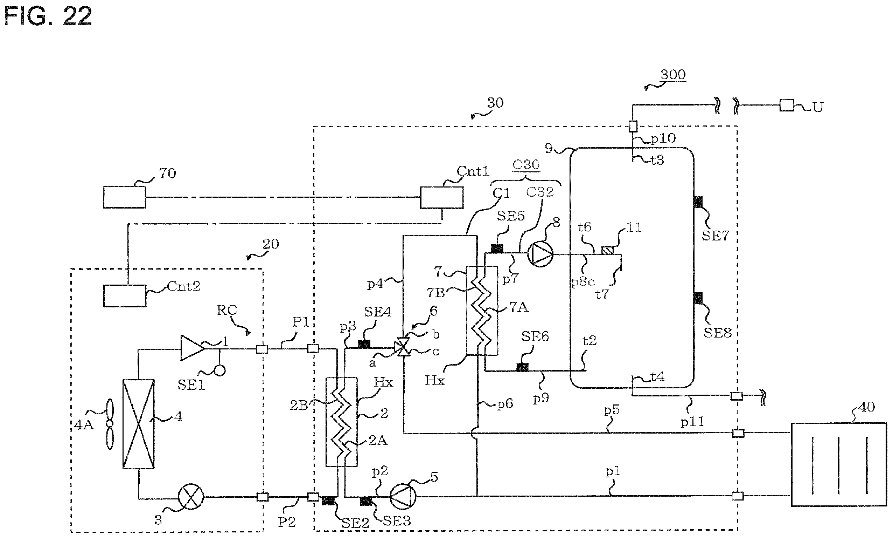

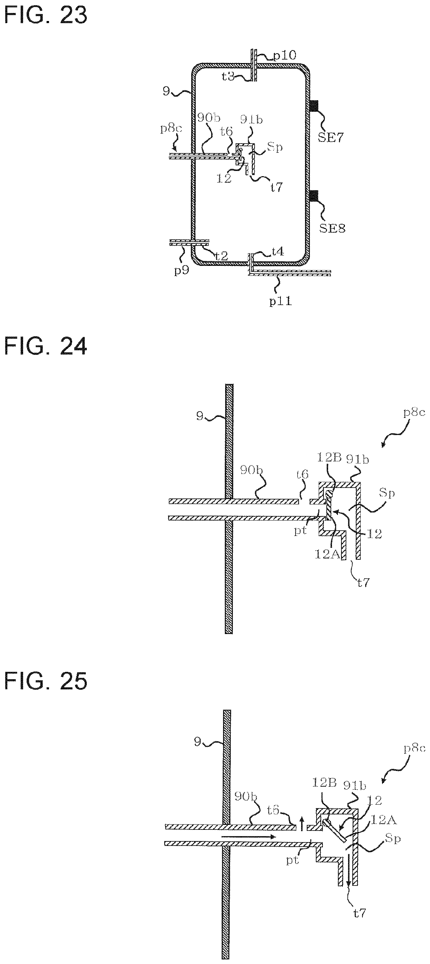

In Embodiment 3, the points that differ from Embodiments 1 and 2 will be described mainly. Components that are the same will be denoted with the same reference signs, and a description of such components will be omitted. Fig. 22 is a schematic configuration diagram of a water heater 300 according to Embodiment 3. Fig. 23 is an explanatory diagram of the hot water tank 9 and an inflow pipe p8c of the water heater 300 according to Embodiment 3. Fig. 24 is an enlarged view of the inflow pipe p8c illustrated in Fig. 23.

### <Configuration of Embodiment 3>

The inflow pipe p8c of a secondary circuit C32 of a heat medium circuit C30 of the water heater 300 has a different configuration from the inflow pipe p8 of the secondary circuit C2 of the heat medium circuit C described in Embodiment 1. However, the rest of the configuration of the heat medium circuit C30 is the same as the rest of the configuration of the heat medium circuit C of the water heater 100. As illustrated in Figs. 23 and 24, the inflow pipe p8c is provided with a first flow inlet t6 provided inside the hot water tank 9 and a second flow inlet t7 provided inside the hot water tank 9 and farther downstream than the first flow inlet t6 in the flow direction of the heat medium. The first flow inlet t6 and the second flow inlet t7 are openings provided in the inflow pipe p8c. The area of the opening of the first flow inlet t6 is smaller than the area of the opening of the second flow inlet t7. Also, the inflow pipe p8c is provided with an opening and closing mechanism 12 provided farther downstream than the first flow inlet t6 in the flow direction of the heat medium and also farther upstream than the second flow inlet t7 in the flow direction of the heat medium. The opening and closing mechanism 12 is configured to open and close depending on the flow rate of the heat medium flowing through the inflow pipe p8c. Also, the inflow pipe p8c is provided with a space Sp in which the opening and closing mechanism 12 is provided and a flow pt that is provided farther upstream than the space Sp in the flow direction of the heat medium and that is opened and closed by the opening and closing mechanism 12. The space Sp is provided farther downstream than the first flow inlet t6 in the flow direction of the heat medium and also farther upstream than the second flow inlet t7 in the flow direction of the heat medium. The opening and closing mechanism 12 is provided with an opening and closing part 12A that opens and closes the flow pt, and a hinge part 12B that supports the opening and closing part 12A in such a manner that the opening and closing part 12A is rotatable. The opening and closing part 12A closes the flow pt by the weight of the opening and closing part 12A itself.

As illustrated in Figs. 23 and 24, the inflow pipe p8c is provided with a horizontal part 90b that extends parallel to the horizontal plane and a vertical part 91b that extends parallel to the vertical direction. The flow pt and the first flow inlet t6 are provided in the horizontal part 90b. The space Sp, the second flow inlet t7, and the opening and closing mechanism 12 are provided in the vertical part 91b.

### <Action of Embodiment 3>

Fig. 25 illustrates the opening and closing mechanism 12 in the first boiling operation. The rotation frequency of the first pump 8 in the first boiling operation is higher than the rotation frequency of the first pump 8 in the second boiling operation. For this reason, the pressure of the heat medium in the flow pt in the first boiling operation is higher than the pressure of the heat medium in the flow pt in the second boiling operation. Consequently, the heat medium in the flow pt in the first boiling operation pushes up the opening and closing part 12A. As a result, the heat medium in the flow pt flows into the hot water tank 9 through the space Sp and the second flow inlet t7. Also, part of the heat medium flowing through the flow pt flows into the hot water tank 9 from the first flow inlet t6.

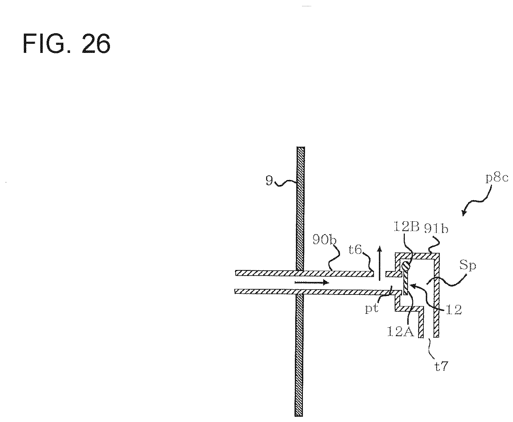

Fig. 26 illustrates the opening and closing mechanism 12 in the second boiling operation. Because the rotation frequency of the first pump 8 in the second boiling operation is kept low, the heat medium in the flow pt in the second boiling operation cannot push up the opening and closing part 12A. In other words, the flow pt is closed by the opening and closing part 12A. Consequently, the heat medium in the flow pt flows into the hot water tank 9 from the first flow inlet t6.

### <Effects of Embodiment 3>

The opening and closing mechanism 12 configured to open and close depending on the flow rate of the heat medium is provided in the inflow pipe p8c. Herein, the flow rate of the heat medium in the inflow pipe p8c in the first boiling operation is greater than the flow rate of the heat medium in the inflow pipe p8c in the second boiling operation. For this reason, in the first boiling operation, the heat medium pushes up the opening and closing part 12A of the opening and closing mechanism 12, and the flow pt opens. In addition, part of the heat medium flowing through the flow pt flows downward from the second flow inlet t7 and into the hot water tank 9. With this arrangement, the heat medium flowing into the hot water tank 9 from the second flow inlet t7 flows to the lower part of the hot water tank 9, and subsequently, flows to the upper part of the hot water tank 9 by buoyant force. As a result, the overall temperature of the heat medium in the hot water tank 9 rises.
Also, other part of the heat medium flowing through the flow pt flows upward from the first flow inlet t6 and into the hot water tank 9. The other part of the heat medium flowing through the flow pt contributes to a temperature increase of the heat medium in the upper part of the hot water tank 9.

Also, in the second boiling operation, the heat medium is unable to push up the opening and closing part 12A of the opening and closing mechanism 12, and the flow pt remains closed. For this reason, the heat medium flowing through the flow pt flows upward from the first flow inlet t6 and into the hot water tank 9. Also, because the heat medium flowing through the flow pt is heated by the second heat exchanger 7, a correspondingly strong buoyant force works on the heat medium that reaches the hot water tank 9 from the flow pt. With this arrangement, the heat medium flowing into the hot water tank 9 from the first flow inlet t6 hardly flows to the lower part of the hot water tank 9, and flows to the upper part of the hot water tank 9. In other words, the heat medium flowing into the hot water tank 9 from the first flow inlet t6 hardly passes through the temperature stratification in the process of flowing inside the hot water tank 9. Consequently, the temperature stratification is hardly disturbed by the heat medium flowing into the hot water tank 9 from the first flow inlet t6. The water-heater 300 can therefore maintain the temperature stratification in the hot water tank 9 more reliably. In other words, the water heater 300 can reduce a lowering of the temperature of the heat medium to be used for hot water that is positioned higher than the temperature stratification.

The opening and closing mechanism 12 is capable of opening and closing the flow pt without having the controller Cnt1 control the opening and closing mechanism 12. For this reason, it is possible to keep the mechanism of the inflow pipe p8c from being complicated. Note that in Embodiment 3, the action of the weight of the opening and closing part 12A itself is utilized to open and close the flow pt, but the configuration is not limited to the one in Embodiment 3. The elastic force of a spring or the magnetic force of a magnet may also be utilized to open and close the flow pt.

The area of the opening of the second flow inlet t7 is larger than the area of the opening of the first flow inlet t6. For this reason, in the first boiling operation, the flow rate of the heat medium flowing into the hot water tank 9 from the second flow inlet t7 is greater than the flow rate of the heat medium flowing into the hot water tank 9 from the first flow inlet t6. Consequently, the heat medium flowing through the inflow pipe p8c flows into the hot water tank 9 mainly from the second flow inlet t7. The heat medium flowing into the hot water tank 9 flows to the lower part of the hot water tank 9, and subsequently, flows to the upper part of the hot water tank 9 by buoyant force. In other words, because the area of the opening of the second flow inlet t7 is larger than the area of the opening of the first flow inlet t6, the heat medium heated in the first boiling operation easily spreads throughout the hot water tank 9.

Also, because the area of the opening of the first flow inlet t6 is smaller than the area of the opening of the second flow inlet t7, in the second boiling operation, the flow rate of the heat medium flowing into the hot water tank 9 from the first flow inlet t6 rises. For this reason, the heat medium flowing into the hot water tank 9 from the first flow inlet t6 reaches the upper part of the hot water tank 9 quickly.
Consequently, the water heater 300 can maintain the temperature stratification in the hot water tank 9 more reliably. In other words, the water heater 300 can reduce a lowering of the temperature of the heat medium to be used for hot water that is positioned higher than the temperature stratification.

### Reference Signs List

1 compressor 2 first heat exchanger 2A first heat medium flow 2B refrigerant flow 3 expansion device 4 heat exchanger 4A fan 5 second pump 6 flow switching device 7 second heat exchanger 7A third heat medium flow 7B second heat medium flow 8 first pump 9 hot water tank 9A side face 10 flow switching device 12 opening and closing mechanism 12A opening and closing part 12b hinge part 20 heat pump unit 30 tank unit 40 heating device 50A acquisition unit 50B computation unit 50C control unit 50D memory 60A acquisition unit 60B computation unit 60C control unit 60D memory 70 remote controller 90 horizontal part 90b horizontal part 91 vertical part 91b vertical part 100 water heater 100B water heater 200 water heater 300 water heater C heat medium circuit C1 primary circuit C2 secondary circuit C20 heat medium circuit C22 secondary circuit C3 heat medium circuit C30 heat medium circuit C32 secondary circuit Cnt1 controller Cnt2 controller Hx heating heat exchanger P1 gas pipe P2 liquid pipe RC refrigerant circuit SE1 pressure sensor SE2 temperature sensor SE3 temperature sensor SE4 temperature sensor SE5 temperature sensor SE6 temperature sensor SE7 upper part temperature sensor SE8 lower part temperature sensor Sp space U use part a inlet b outlet c outlet d inlet e second outlet f first outlet p1 pipe p10 tap pipe p11 pipe p2 pipe p3 pipe p4 pipe p5 pipe p6 pipe p7 pipe p8 inflow pipe p82 first inflow pipe p83 second inflow pipe p8b inflow pipe p8c inflow pipe p9 outflow pipe pt flow t1 second opening t2 third opening t3 first opening t4 opening t5 fourth opening t6 first flow inlet t7 second flow inlet

## Claims

1. A water heater (100), comprising:
a hot water tank (9) that stores a heat medium;
a heating heat exchanger (Hx) that heats the heat medium supplied to the hot water tank (9);
a first pump (8) configured to convey the heat medium to the hot water tank (9);
a heat medium circuit (C) in which the hot water tank (9), the first pump (8), and the heating heat exchanger (Hx) are provided;
a lower part temperature sensor (SE8) provided in the hot water tank (9), the lower part temperature sensor (SE8) being configured to measure a lower part temperature of the heat medium stored in the hot water tank (9);
an upper part temperature sensor (SE7) provided in the hot water tank (9) and provided higher than the lower part temperature sensor (SE8), the upper part temperature sensor (SE7) being configured to measure an upper part temperature of the heat medium stored in the hot water tank (9); and
a controller (Cnt1) configured to control the first pump (8),
in a case in which the upper part temperature is lower than a first boiling temperature (Tus1), the controller (Cnt1) being configured to execute a first boiling operation in which the first pump (8) is operated at a first pump rotation frequency,
**characterized in that**
in a case in which the upper part temperature is lower than a second boiling temperature (Tus2) that is higher than the first boiling temperature (Tus1) and the lower part temperature is lower than a third boiling temperature (Tds2) that is lower than the first boiling temperature (Tus1), the controller (Cnt1) being configured to execute a second boiling operation in which the first pump (8) is operated at a second pump rotation frequency that is lower than the first pump rotation frequency.

2. The water heater (100) of claim 1, wherein
while the controller (Cnt1) is executing the first boiling operation, the controller (Cnt1) is configured to stop the first pump (8) in a case in which the lower part temperature becomes higher than a first stopping temperature (Tde1) that is higher than the first boiling temperature (Tus1), and
while the controller (Cnt1) is executing the second boiling operation, the controller (Cnt1) is configured to stop the first pump (8) in a case in which the upper part temperature becomes higher than a second stopping temperature (Tue2) that is higher than the first stopping temperature (Tdel).

3. The water heater (100) of claim 1, wherein while the controller (Cnt1) is executing the first boiling operation, the controller (Cnt1) is configured to stop the first pump (8) in a case in which the lower part temperature becomes higher than a first stopping temperature (Tdel).

4. The water heater (100) of claim 1, wherein while the controller (Cnt1) is executing the second boiling operation, the controller (Cnt1) is configured to stop the first pump (8) in a case in which the upper part temperature becomes higher than a second stopping temperature (Tue2).

5. The water heater (100) of any one of claims 1 to 4, further comprising
a second pump (5) configured to convey a first heat medium, wherein
the heating heat exchanger (Hx) comprises
a first heat exchanger (2) that includes a first heat medium flow (2A) allowing the first heat medium to flow and a refrigerant flow (2B) allowing refrigerant to flow, and that exchanges heat between the first heat medium and the refrigerant, and
a second heat exchanger (7) that includes a second heat medium flow (7B) allowing the first heat medium to flow and a third heat medium flow (7A) allowing a second heat medium to flow, and that exchanges heat between the first heat medium in the second heat medium flow (7B) and the second heat medium in the third heat medium flow (7A),
the heat medium circuit (C) includes
a primary circuit (C1) through which the first heat medium flows, the primary circuit (C1) being provided with the second pump (5), the first heat medium flow (2A) of the first heat exchanger (2), and the second heat medium flow (7B) of the second heat exchanger (7), and
a secondary circuit (C2) through which the second heat medium flows, the secondary circuit (C2) being provided with the first pump (8), the hot water tank (9), and the third heat medium flow (7A) of the second heat exchanger (7),
in the first boiling operation, the controller (Cnt1) is configured to operate the second pump (5) at a third pump rotation frequency, and
in the second boiling operation, the controller (Cnt1) is configured to operate the second pump (5) at a fourth pump rotation frequency that is lower than the third pump rotation frequency.

6. The water heater (200) of any one of claims 1 to 5, wherein the heat medium circuit (C) includes
a tap pipe (p10) connected to the hot water tank (9), the tap pipe (p10) allowing the heat medium to be provided to a use part (U) of the heat medium,
an inflow pipe (p8) connected to the hot water tank (9), the inflow pipe (p8) allowing the heat medium to flow into the hot water tank (9) from a discharge part of the first pump (8), and
an outflow pipe (p9) connected to the hot water tank (9), the outflow pipe (p9) allowing the heat medium to flow out of the hot water tank (9) to the heating heat exchanger (Hx),
the tap pipe (p10) includes a first opening (t3) through which the heat medium flows, the first opening (t3) being provided inside the hot water tank (9),
the inflow pipe (p8) includes a second opening (t1) through which the heat medium flows, the second opening (t1) being provided inside the hot water tank (9) and provided lower than the first opening (t3) of the tap pipe (p10),
the outflow pipe (p9) includes a third opening (t2) through which the heat medium flows, the third opening (t2) being provided inside the hot water tank (9) and provided lower than the second opening (t1) of the inflow pipe (p8),
the upper part temperature sensor (SE7) is provided lower than the first opening (t3) of the tap pipe (p10) and higher than the second opening (t1) of the inflow pipe (p8), and
the lower part temperature sensor (SE8) is provided lower than the second opening (t1) of the inflow pipe (p8) and higher than the third opening (t2) of the outflow pipe (p9).

7. The water heater (200) of any one of claims 1 to 5, further comprising
a flow switching device (10) that includes an inlet (d) joined to a discharge part of the first pump (8), a first outlet (f) joined to the hot water tank (9), and a second outlet (e) joined to the hot water tank (9), wherein
the heat medium circuit (C20) includes
a tap pipe (p10) connected to the hot water tank (9), the tap pipe (p10) allowing the heat medium to be provided to a use part (U) of the heat medium,
a first inflow pipe (p82) connected to the hot water tank (9) and joined to the first outlet (f) of the flow switching device (10),
a second inflow pipe (p83) connected to the hot water tank (9) and joined to the second outlet (e) of the flow switching device (10), and
an outflow pipe (p9) connected to the hot water tank (9), the outflow pipe (p9) allowing the heat medium to flow out of the hot water tank (9) to the heating heat exchanger (Hx),
the tap pipe (p10) includes a first opening (t3) through which the heat medium flows, the first opening (t3) being provided inside the hot water tank (9),
the first inflow pipe (p82) includes a second opening (t1) through which the heat medium flows, the second opening (t1) being provided inside the hot water tank (9),
the outflow pipe (p9) includes a third opening (t2) through which the heat medium flows, the third opening (t2) being provided inside the hot water tank (9),
the second inflow pipe (p83) includes a fourth opening (t5) through which the heat medium flows, the fourth opening (t5) being provided inside the hot water tank (9),
the second opening (t1) of the first inflow pipe (p82) is provided lower than the first opening (t3) of the tap pipe (p10) and the fourth opening (t5) of the second inflow pipe (p83), and
the third opening (t2) of the outflow pipe (p9) is provided lower than the second opening (t1) of the first inflow pipe (p82).

8. The water heater (200) of claim 7, wherein
in the first boiling operation, the controller (Cnt1) is configured to open the first outlet (f) and close the second outlet (e), and
in the second boiling operation, the controller (Cnt1) is configured to close the first outlet (f) and open the second outlet (e) .

9. The water heater (300) of any one of claims 1 to 5, wherein the heat medium circuit (C30) includes
a tap pipe (p10) connected to the hot water tank (9), the tap pipe (p10) allowing the heat medium to be provided to a use part (U) of the heat medium,
an inflow pipe (p8c) connected to the hot water tank (9), the inflow pipe (p8c) allowing the heat medium to flow into the hot water tank (9) from a discharge part of the first pump (8), and
an outflow pipe (p9) connected to the hot water tank (9), the outflow pipe (p9) allowing the heat medium to flow out of the hot water tank (9) to the heating heat exchanger (Hx),
the inflow pipe (p8c) includes
a first flow inlet (t6) provided inside the hot water tank (9), a second flow inlet (t7) provided inside the hot water tank (9) and provided farther downstream than the first flow inlet (t6) in a flow direction of the heat medium, and
an opening and closing mechanism (12) provided farther downstream than the first flow inlet (t6) in the flow direction of the heat medium and farther upstream than the second flow inlet (t7) in the flow direction of the heat medium, the opening and closing mechanism (12) being configured to open and close depending on a flow rate of the heat medium flowing through the inflow pipe (p8c), and
the opening and closing mechanism (12) is open in the first boiling operation and closed in the second boiling operation.

10. The water heater (100) of any one of claims 1 to 9, further comprising
a refrigerant circuit (RC) in which a compressor (1), the heating heat exchanger (Hx), an expansion device (3), and an evaporator (4) are provided, wherein,
where a first average heating capacity is a value obtained by dividing an amount of increased heat in the hot water tank (9) from a start to an end of the first boiling operation, by an amount of time from the start to the end of the first boiling operation, and
where a second average heating capacity is a value obtained by dividing an amount of increased heat in the hot water tank (9) from a start to an end of the second boiling operation, by an amount of time from the start to the end of the second boiling operation,
the controller (Cnt1) is configured to
control the compressor (1) in such a manner that the second average heating capacity is smaller than the first average heating capacity, and
control the expansion device (3) in such a manner that a second degree of subcooling during the second boiling operation is greater than a first degree of subcooling during the first boiling operation.

11. The water heater (100) of any one of claims 1 to 9, further comprising
a refrigerant circuit (RC) in which a compressor (1), the heating heat exchanger (Hx), an expansion device (3), and an evaporator (4) are provided.

## Patentansprüche

1. Warmwasserbereiter (100), wobei der Warmwasserbereiter (100) aufweist:
einen Warmwasserbehälter (9), der ein Wärmemedium speichert;
einen Heizwärmetauscher (Hx), der das dem Warmwasserbehälter (9) zugeführte Wärmemedium erhitzt;
eine erste Pumpe (8), die dazu eingerichtet ist, das Wärmemedium zu dem Warmwasserbehälter (9) zu fördern;
einen Wärmemedium-Kreislauf (C), in dem der Warmwasserbehälter (9), die erste Pumpe (8) und der Heizwärmetauscher (Hx) angeordnet sind;
einen Unterteil-Temperatursensor (SE8), der in dem Warmwassertank (9) angeordnet ist, wobei der Unterteil-Temperatursensor dazu eingerichtet ist, eine Unterteil-Temperatur des in dem Warmwasserbehälter (9) gespeicherten Wärmemediums zu messen;
einen Oberteil-Temperatursensor (SE7), der in dem Warmwasserbehälter (9) angeordnet ist und höher als der Unterteil-Temperatursensor (SE8) angeordnet ist, wobei der Oberteil-Temperatursensor (SE7) dazu eingerichtet ist, eine Oberteil-Temperatur des in dem Warmwasserbehälter (9) gespeicherten Wärmemediums zu messen; und
eine Steuerung (Cnt1), dazu eingerichtet, die erste Pumpe (8) zu steuern,
wobei in einem Fall, in dem die Oberteil-Temperatur niedriger als eine erste Siedetemperatur (Tus1) ist, die Steuerung (Cnt1) dazu eingerichtet ist, einen ersten Siedevorgang auszuführen, in dem die erste Pumpe (8) mit einer ersten Pumprotationsfrequenz betrieben wird,
**dadurch gekennzeichnet, dass**
in einem Fall, in dem die Oberteil-Temperatur niedriger ist als eine zweite Siedetemperatur (Tus2), die höher ist als die erste Siedetemperatur (Tus1) und die Unterteil-Temperatur niedriger ist als eine dritte Siedetemperatur (Tds2), die niedriger ist als die erste Siedetemperatur (Tus1), die Steuerung (Cnt1) dazu eingerichtet ist, einen zweiten Siedevorgang auszuführen, in dem die erste Pumpe (8) mit einer zweiten Pumprotationsfrequenz betrieben wird, die niedriger ist als die erste Pumprotationsfrequenz.

2. Warmwasserbereiter (100) gemäß Anspruch 1, wobei
während die Steuerung (Cnt1) den ersten Siedevorgang ausführt, die Steuerung (Cnt1) dazu eingerichtet ist, die erste Pumpe (8) in einem Fall zu stoppen, in dem die Unterteil-Temperatur höher wird als die erste Stopp-Temperatur (Tde1), die höher ist als die erste Siedetemperatur (Tus1), und
während die Steuerung (Cnt1) den zweiten Siedevorgang ausführt, die Steuerung (Cnt1) dazu eingerichtet ist, die erste Pumpe (8) in einem Fall zu stoppen, in dem die Oberteil-Temperatur höher wird als eine zweite Stopp-Temperatur (Tue2), die höher ist als die erste Stopp-Temperatur (Tdel).

3. Warmwasserbereiter (100) gemäß Anspruch 1, wobei während die Steuerung (Cnt1) den ersten Siedevorgang ausführt, die Steuerung (Cnt1) dazu eingerichtet ist, die erste Pumpe (8) in einem Fall zu stoppen, in dem die Unterteil-Temperatur höher wird als eine erste Stopp-Temperatur (Tdel).

4. Warmwasserbereiter (100) gemäß Anspruch 1, wobei während die Steuerung (Cnt1) den zweiten Siedevorgang ausführt, die Steuerung (Cnt1) dazu eingerichtet ist, die erste Pumpe (8) in einem Fall zu stoppen, in dem die Oberteil-Temperatur höher wird als eine zweite Stopp-Temperatur (Tue2).

5. Warmwasserbereiter (100) gemäß einem der Ansprüche 1 bis 4, wobei der Warmwasserbereiter (100) ferner aufweist:
eine zweite Pumpe (5), dazu eingerichtet, ein erstes Wärmemedium zu fördern, wobei
der Heizwärmetauscher (Hx) aufweist:
einen ersten Wärmetauscher (2), der einen ersten Wärmemediumstrom (2A), der ein Strömen des ersten Wärmemediums erlaubt, und einen Kältemittelstrom (2B), der ein Strömen des Kältemittels erlaubt, beinhaltet und der Wärme zwischen dem ersten Wärmemedium und dem Kältemittel austauscht, und
einen zweiten Wärmetauscher (7), der einen zweiten Wärmemediumstrom (7B), der ein Strömen des ersten Wärmemediums erlaubt, und einen dritten Wärmemediumstrom (7A), der ein Strömen eines zweiten Wärmemediums erlaubt, beinhaltet und der Wärme zwischen dem ersten Wärmemedium in dem zweiten Wärmemediumstrom (7B) und dem zweiten Wärmemedium in dem dritten Wärmemediumstrom (7A) austauscht,
wobei der Wärmemedium-Kreislauf (C) aufweist:
einen primären Kreislauf (C1), durch den das erste Wärmemedium strömt, wobei in dem primären Kreislauf (C1) die zweite Pumpe (5), der erste Wärmemediumstrom (2A) des ersten Wärmetauschers (2) und der zweite Wärmemediumstrom (7B) des zweiten Wärmetauschers (7) angeordnet sind, und
einen sekundären Kreislauf (C2), durch den das zweite Wärmemedium strömt, wobei in dem sekundären Kreislauf (C2) die erste Pumpe (8), der Warmwasserbehälter (9) und der dritte Wärmemediumstrom (7A) des zweiten Wärmetauschers (7) angeordnet sind,
wobei in dem ersten Siedevorgang die Steuerung (Cnt1) dazu eingerichtet ist, die zweite Pumpe (5) mit einer dritten Pumprotationsfrequenz zu betreiben, und
in dem zweiten Siedevorgang die Steuerung (Cnt1) dazu eingerichtet ist, die zweite Pumpe (5) mit einer vierten Pumprotationsfrequenz zu betreiben, die niedriger ist als eine dritte Pumprotationsfrequenz.

6. Warmwasserbereiter (200) gemäß einem der Ansprüche 1 bis 5, wobei
der Wärmemedium-Kreislauf (C) aufweist:
eine Zapfleitung (p10), die mit dem Warmwasserbehälter (9) verbunden ist, wobei die Zapfleitung (p10) ein Bereitstellen des Wärmemediums zu einem Verwendungsteil (U) des Wärmemediums erlaubt,
eine Zulaufleitung (p8), die mit dem Warmwasserbehälter (9) verbunden ist, wobei die Zulaufleitung (p8) ein Strömen des Wärmemediums von dem Auslassteil der ersten Pumpe (8) in den Warmwasserbehälter (9) erlaubt, und
eine Ablaufleitung (p9), die mit dem Warmwasserbehälter (9) verbunden ist, wobei die Ablaufleitung (p9) ein Strömen des Wärmemediums aus dem Warmwasserbehälter (9) zu dem Heizwärmetauscher (Hx) erlaubt,
wobei die Zapfleitung (p10) eine erste Öffnung (t3) aufweist, durch die das Wärmemedium strömt, wobei die erste Öffnung (t3) innerhalb des Warmwasserbehälters (9) angeordnet ist,
wobei die Zulaufleitung (p8) eine zweite Öffnung (t1) aufweist, durch die das Wärmemedium strömt, wobei die zweite Öffnung (t1) innerhalb des Warmwasserbehälters (9) angeordnet ist und niedriger als die erste Öffnung (t3) der Zapfleitung (p10) angeordnet ist,
wobei die Ablaufleitung (p9) eine dritte Öffnung (t2) aufweist, durch die das Wärmemedium strömt, wobei die dritte Öffnung (t2) innerhalb des Warmwasserbehälters (9) angeordnet ist und niedriger als die zweite Öffnung (t1) der Zulaufleitung (p8) angerordnet ist,
wobei der Oberteil-Temperatursensor (SE7) niedriger als die erste Öffnung (t3) der Zapfleitung (p10) und höher als die zweite Öffnung (t1) der Zulaufleitung (p8) angeordnet ist, und
der Unterteil-Temperatursensor (SE8) niedriger als die zweite Öffnung (t1) der Zulaufleitung (p8) und höher als die dritte Öffnung (t2) der Ablaufleitung (p9) angeordnet ist.

7. Warmwasserbereiter (200) gemäß einem der Ansprüche 1 bis 5, wobei der Warmwasserbereiter (200) ferner aufweist:
eine Strömungsschalteinrichtung (10), die einen Einlass (d), der mit einem Ablaufteil der ersten Pumpe (8) verbunden ist, einen ersten Auslass (f), der mit dem Warmwasserbehälter (9) verbunden ist, und einen zweiten Auslass (e), der mit dem Warmwasserbehälter (9) verbunden ist, aufweist, wobei
der Wärmemedium-Kreislauf (C20) aufweist:
eine Zapfleitung (p10), die mit dem Warmwasserbehälter (9) verbunden ist, wobei die Zapfleitung (p10) ein Bereitstellen des Wärmemediums zu einem Verwendungsteil (U) des Wärmemediums erlaubt,
eine erste Zulaufleitung (p82), die mit dem Warmwasserbehälter (9) und mit dem ersten Auslass (f) der Strömungsschalteinrichtung (10) verbunden ist,
eine zweite Zulaufleitung (p83), die mit dem Warmwasserbehälter (9) und dem zweiten Auslass (e) der Strömungsschalteinrichtung (10) verbunden ist, und
eine Ablaufleitung (p9), die mit dem Warmwasserbehälter (9) verbunden ist, wobei die Ablaufleitung (p9) ein Strömen des Wärmemediums aus dem Warmwasserbehälter (9) zu dem Heizwärmetauscher (Hx) erlaubt,
wobei die Zapfleitung (p10) eine erste Öffnung (t3) aufweist, durch die das Wärmemedium strömt, wobei die erste Öffnung (t3) innerhalb des Warmwasserbehälters (9) angeordnet ist,
wobei die erste Zulaufleitung (p82) eine zweite Öffnung (t1) aufweist, durch die das Wärmemedium strömt, wobei die zweite Öffnung (t1) innerhalb des Warmwasserbehälters (9) angeordnet ist,
wobei die Ablaufleitung (p9) eine dritte Öffnung (t2) aufweist, durch die das Wärmemedium strömt, wobei die dritte Öffnung (t2) innerhalb des Warmwasserbehälters (9) angeordnet ist,
wobei die zweite Zulaufleitung (p83) eine vierte Öffnung (t5) aufweist, durch die das Wärmemedium strömt, wobei die vierte Öffnung (t5) innerhalb des Warmwasserbehälters (9) angeordnet ist,
wobei die zweite Öffnung (t1) der ersten Zulaufleitung (p82) niedriger als die erste Öffnung (t3) der Zapfleitung (p10) und die vierte Öffnung (t5) der zweiten Zulaufleitung (p83) angeordnet ist, und
die dritte Öffnung (t2) der Ablaufleitung (p9) niedriger als die zweite Öffnung (t1) der ersten Zulaufleitung (p82) angeordnet ist.

8. Warmwasserbereiter (200) gemäß Anspruch 7, wobei
in dem ersten Siedevorgang, die Steuerung (Cnt1) dazu eingerichtet ist, den ersten Auslass (f) zu Öffnen und den zweiten Auslass (e) zu Schließen, und
in dem zweiten Siedevorgang, die Steuerung (Cnt1) dazu eingerichtet ist, den ersten Auslass (f) zu Schließen und den zweiten Auslass (e) zu Öffnen.

9. Warmwasserbereiter (300) gemäß einem der Ansprüche 1 bis 5, wobei
der Wärmemedium-Kreislauf (C30) aufweist:
eine Zapfleitung (p10), die mit dem Warmwasserbehälter (9) verbunden ist, wobei die Zapfleitung (p10) ein Bereitstellen des Wärmemediums zu einem Verwendungsteil (U) des Wärmemediums erlaubt,
eine Zulaufleitung (p8c), die mit dem Warmwasserbehälter (9) verbunden ist, wobei die Zulaufleitung (p8) ein Strömen des Wärmemediums von einem Auslassteil der ersten Pumpe (8) in den Warmwasserbehälter (9) erlaubt, und
eine Ablaufleitung (p9), die mit dem Warmwasserbehälter (9) verbunden ist, wobei die Ablaufleitung (p9) ein Strömen des Wärmemediums aus dem Warmwasserbehälter (9) zu dem Heizwärmetauscher (Hx) erlaubt,
wobei die Zulaufleitung (p8c) aufweist:
einen ersten Strömungseinlass (t6), der in dem Warmwasserbehälter (9) angeordnet ist,
einen zweiten Strömungseinlass (t7), der in dem Warmwasserbehälter (9) angeordnet ist und weiter stromabwärts gemäß einer Strömungsrichtung des Wärmemediums als der erste Strömungseinlass (t6) angeordnet ist, und
einen Öffnungs- und Schließmechanismus (12), der weiter stromabwärts gemäß einer Strömungsrichtung des Wärmemediums als der erste Strömungseinlass (t6) und weiter stromaufwärts gemäß einer Strömungsrichtung des Wärmemediums als der zweite Strömungseinlass (t7) angeordnet ist, wobei der Öffnungs- und Schließmechanismus (12) dazu eingerichtet ist, abhängig von der Strömungsrate des durch die Zulaufleitung (p8c) strömenden Wärmemediums zu Öffnen und zu Schließen, und
wobei der Öffnungs- und Schließmechanismus (12) in dem ersten Siedevorgang geöffnet ist und in dem zweiten Siedevorgang geschlossen ist.

10. Warmwasserbereiter (100) gemäß einem der Ansprüche 1 bis 9, wobei der Warmwasserbereiter (100) ferner aufweist:
einen Kältemittel-Kreislauf (RC), in dem ein Kompressor (1), der Heizwärmetauscher (Hx), eine Expansionseinrichtung (3) und ein Verdampfer (4) angeordnet sind, wobei,
wo eine erste durchschnittliche Heizleistung ein Wert ist, der durch Teilen einer Menge von erhöhter Wärme in dem Warmwasserbehälter (9) von einem Beginn zu einem Ende des ersten Siedevorgangs mit einer Zeitdauer von dem Beginn zu dem Ende des ersten Siedevorgangs erhalten wird, und
wo eine zweite durchschnittliche Heizleistung ein Wert ist, der durch Teilen einer Menge von erhöhter Wärme in dem Warmwasserbehälter (9) von einem Beginn bis zu einem Ende des zweiten Siedevorgangs mit einer Zeitdauer von dem Beginn bis zu dem Ende des zweiten Siedevorgangs erhalten wird,
die Steuerung (Cnt1) dazu eingerichtet ist,
den Kompressor (1) derartig zu steuern, dass die zweite durchschnittliche Heizleistung niedriger ist als die erste durchschnittliche Heizleistung, und
die Expansionseinrichtung (3) derartig zu steuern, dass ein zweiter Unterkühlungsgrad während des zweiten Siedevorgangs größer ist als ein erster Unterkühlungsgrad während des ersten Siedevorgangs.

11. Warmwasserbereiter (100) gemäß einem der Ansprüche 1 bis 9, wobei der Warmwasserbereiter (100) ferner aufweist:
einen Kältemittel-Kreislauf (RC), in dem ein Kompressor (1), der Heizwärmetauscher (Hx), eine Expansionseinrichtung (3) und ein Verdampfer (4) angeordnet sind.

## Revendications

1. Chauffe-eau (100), comprenant :
un réservoir d'eau chaude (9) qui stocke un milieu thermique ;
un échangeur de chaleur de chauffage (Hx) qui chauffe le milieu thermique fourni au réservoir d'eau chaude (9) ;
une première pompe (8) configurée pour transporter le milieu thermique vers le réservoir d'eau chaude (9) ;
un circuit de milieu thermique (C) dans lequel le réservoir d'eau chaude (9), la première pompe (8), et l'échangeur de chaleur de chauffage (Hx) sont prévus ;
un capteur de température de partie inférieure (SE8) prévu dans le réservoir d'eau chaude (9), le capteur de température de partie inférieure (SE8) étant configuré pour mesurer une température de partie inférieure du milieu thermique stocké dans le réservoir d'eau chaude (9) ;
un capteur de température de partie supérieure (SE7) prévu dans le réservoir d'eau chaude (9), et prévu plus haut que le capteur de température de partie inférieure (SE8), le capteur de température de partie supérieure (SE7) étant configuré pour mesurer une température de partie supérieure du milieu thermique stocké dans le réservoir d'eau chaude (9) ; et
un dispositif de commande (Cnt1) configuré pour commander la première pompe (8),
dans un cas où la température de partie supérieure est plus basse qu'une première température d'ébullition (Tus1), le dispositif de commande (Cnt1) est configuré pour exécuter une première opération d'ébullition dans laquelle la première pompe (8) fonctionne à une première fréquence de rotation de pompe,
**caractérisé en ce que**
dans un cas où la température de partie supérieure est plus basse qu'une deuxième température d'ébullition (Tus2) qui est plus haute que la première température d'ébullition (Tus1), et où la température de partie inférieure est plus basse qu'une troisième température d'ébullition (Tds2) qui est plus basse que la première température d'ébullition (Tus1), le dispositif de commande (Cnt1) est configuré pour exécuter une deuxième opération d'ébullition dans laquelle la première pompe (8) fonctionne à une deuxième fréquence de rotation de pompe qui est plus basse que la première fréquence de rotation de pompe.

2. Chauffe-eau (100) selon la revendication 1, dans lequel tandis que le dispositif de commande (Cnt1) exécute la première opération d'ébullition, le dispositif de commande (Cnt1) est configuré pour arrêter la première pompe (8) dans un cas où la température de partie inférieure devient plus haute qu'une première température d'arrêt (Tde1) qui est plus haute que la première température d'ébullition (Tus1), et
tandis que le dispositif de commande (Cnt1) exécute la deuxième opération d'ébullition, le dispositif de commande (Cnt1) est configuré pour arrêter la première pompe (8) dans un cas où la température de partie supérieure devient plus haute qu'une deuxième température d'arrêt (Tue2) qui est plus haute que la première température d'arrêt (Tde1).

3. Chauffe-eau (100) selon la revendication 1, dans lequel, tandis que le dispositif de commande (Cnt1) exécute la première opération d'ébullition, le dispositif de commande (Cnt1) est configuré pour arrêter la première pompe (8) dans un cas où la température de partie inférieure devient plus haute qu'une première température d'arrêt (Tde1).

4. Chauffe-eau (100) selon la revendication 1, dans lequel, tandis que le dispositif de commande (Cnt1) exécute la deuxième opération d'ébullition, le dispositif de commande (Cnt1) est configuré pour arrêter la première pompe (8) dans un cas où la température de partie supérieure devient plus haute qu'une deuxième température d'arrêt (Tue2).

5. Chauffe-eau (100) selon l'une quelconque des revendications 1 à 4, comprenant en outre
une deuxième pompe (5) configurée pour transporter un premier milieu thermique, dans lequel
l'échangeur de chaleur de chauffage (Hx) comprend
un premier échangeur de chaleur (2) qui comporte un premier écoulement de milieu thermique (2A) permettant au premier milieu thermique de s'écouler et un écoulement de réfrigérant (2B) permettant au réfrigérant de s'écouler, et qui échange la chaleur entre le premier milieu thermique et le réfrigérant, et
un deuxième échangeur de chaleur (7) qui comporte un deuxième écoulement de milieu thermique (7B) permettant au premier milieu thermique de s'écouler et un troisième écoulement de milieu thermique (7A) permettant à un deuxième milieu thermique de s'écouler, et qui échange la chaleur entre le premier milieu thermique dans le deuxième écoulement de milieu thermique (7B) et le deuxième milieu thermique dans le troisième écoulement de milieu thermique (7A),
le circuit de milieu thermique (C) comporte
un circuit primaire (C1) à travers lequel s'écoule le premier milieu thermique, le circuit primaire (C1) étant pourvu de la deuxième pompe (5), du premier écoulement de milieu thermique (2A) du premier échangeur de chaleur (2), et du deuxième écoulement de milieu thermique (7B) du deuxième échangeur de chaleur (7), et
un circuit secondaire (C2) à travers lequel s'écoule le deuxième milieu thermique, le circuit secondaire (C2) étant pourvu de la première pompe (8), du réservoir d'eau chaude (9), et du troisième écoulement de milieu thermique (7A) du deuxième échangeur de chaleur (7),
dans la première opération d'ébullition, le dispositif de commande (Cnt1) est configuré pour faire fonctionner la deuxième pompe (5) à une troisième fréquence de rotation de pompe, et
dans la deuxième opération d'ébullition, le dispositif de commande (Cnt1) est configuré pour faire fonctionner la deuxième pompe (5) à une quatrième fréquence de rotation de pompe qui est plus basse que la troisième fréquence de rotation de pompe.

6. Chauffe-eau (200) selon l'une quelconque des revendications 1 à 5, dans lequel
le circuit de milieu thermique (C) comporte
un tuyau de soutirage (p10) connecté au réservoir d'eau chaude (9), le tuyau de soutirage (p10) permettant au milieu thermique d'être fourni à une partie d'utilisation (U) du milieu thermique,
un tuyau d'écoulement à l'entrée (p8) connecté au réservoir d'eau chaude (9), le tuyau d'écoulement à l'entrée (p8) permettant au milieu thermique de s'écouler dans le réservoir d'eau chaude (9) depuis une partie d'évacuation de la première pompe (8), et
un tuyau d'écoulement à la sortie (p9) connecté au réservoir d'eau chaude (9), le tuyau d'écoulement à la sortie (p9) permettant au milieu thermique de s'écouler hors du réservoir d'eau chaude (9) vers l'échangeur de chaleur de chauffage (Hx),
le tuyau de soutirage (p10) comporte une première ouverture (t3) à travers laquelle s'écoule le milieu thermique, la première ouverture (t3) étant prévue à l'intérieur du réservoir d'eau chaude (9),
le tuyau d'écoulement à l'entrée (p8) comporte une deuxième ouverture (t1) à travers laquelle s'écoule le milieu thermique, la deuxième ouverture (t1) étant prévue à l'intérieur du réservoir d'eau chaude (9) et prévue plus bas que la première ouverture (t3) du tuyau de soutirage (p10),
le tuyau d'écoulement à la sortie (p9) comporte une troisième ouverture (t2) à travers laquelle s'écoule le milieu thermique, la troisième ouverture (t2) étant prévue à l'intérieur du réservoir d'eau chaude (9) et prévue plus bas que la deuxième ouverture (t1) du tuyau d'écoulement à l'entrée (p8),
le capteur de température de partie supérieure (SE7) est prévu plus bas que la première ouverture (t3) du tuyau de soutirage (p10) et plus haut que la deuxième ouverture (t1) du tuyau d'écoulement à l'entrée (p8), et
le capteur de température de partie inférieure (SE8) est prévu plus bas que la deuxième ouverture (t1) du tuyau d'écoulement à l'entrée (p8) et plus haut que la troisième ouverture (t2) du tuyau d'écoulement à la sortie (p9).

7. Chauffe-eau (200) selon l'une quelconque des revendications 1 à 5, comprenant en outre
un dispositif de commutation d'écoulement (10) qui comporte une entrée (d) reliée à une partie d'évacuation de la première pompe (8), une première sortie (f) reliée au réservoir d'eau chaude (9), et une deuxième sortie (e) reliée au réservoir d'eau chaude (9), dans lequel
le circuit de milieu thermique (C20) comporte
un tuyau de soutirage (p10) connecté au réservoir d'eau chaude (9), le tuyau de soutirage (p10) permettant au milieu thermique d'être fourni à une partie d'utilisation (U) du milieu thermique,
un premier tuyau d'écoulement à l'entrée (p82) connecté au réservoir d'eau chaude (9) et relié à la première sortie (f) du dispositif de commutation d'écoulement (10),
un deuxième tuyau d'écoulement à l'entrée (p83) connecté au réservoir d'eau chaude (9) et relié à la deuxième sortie (e) du dispositif de commutation d'écoulement (10), et
un tuyau d'écoulement à la sortie (p9) connecté au réservoir d'eau chaude (9), le tuyau d'écoulement à la sortie (p9) permettant au milieu thermique de s'écouler hors du réservoir d'eau chaude (9) vers l'échangeur de chaleur de chauffage (Hx),
le tuyau de soutirage (p10) comporte une première ouverture (t3) à travers laquelle s'écoule le milieu thermique, la première ouverture (t3) étant prévue à l'intérieur du réservoir d'eau chaude (9),
le premier tuyau d'écoulement à l'entrée (p82) comporte une deuxième ouverture (t1) à travers laquelle s'écoule le milieu thermique, la deuxième ouverture (t1) étant prévue à l'intérieur du réservoir d'eau chaude (9),
le tuyau d'écoulement à la sortie (p9) comporte une troisième ouverture (t2) à travers laquelle s'écoule le milieu thermique, la troisième ouverture (t2) étant prévue à l'intérieur du réservoir d'eau chaude (9),
le deuxième tuyau d'écoulement à l'entrée (p83) comporte une quatrième ouverture (t5) à travers laquelle s'écoule le milieu thermique, la quatrième ouverture (t5) étant prévue à l'intérieur du réservoir d'eau chaude (9),
la deuxième ouverture (t1) du premier tuyau d'écoulement à l'entrée (p82) est prévue plus bas que la première ouverture (t3) du tuyau de soutirage (p10) et que la quatrième ouverture (15) du deuxième tuyau d'écoulement à l'entrée (p83), et
la troisième ouverture (t2) du tuyau d'écoulement à la sortie (p9) est prévue plus bas que la deuxième ouverture (t1) du premier tuyau d'écoulement à l'entrée (p82).

8. Chauffe-eau (200) selon la revendication 7, dans lequel,
dans la première opération d'ébullition, le dispositif de commande (Cnt1) est configuré pour ouvrir la première sortie (f) et fermer la deuxième sortie (e), et
dans la deuxième opération d'ébullition, le dispositif de commande (Cnt1) est configuré pour fermer la première sortie (f) et ouvrir la deuxième sortie (e).

9. Chauffe-eau (300) selon l'une quelconque des revendications 1 à 5, dans lequel
le circuit de milieu thermique (C30) comporte
un tuyau de soutirage (p10) connecté au réservoir d'eau chaude (9), le tuyau de soutirage (p10) permettant au milieu thermique d'être fourni à une partie d'utilisation (U) du milieu thermique,
un tuyau d'écoulement à l'entrée (p8c) connecté au réservoir d'eau chaude (9), le tuyau d'écoulement à l'entrée (p8c) permettant au milieu thermique de s'écouler dans le réservoir d'eau chaude (9) depuis une partie d'évacuation de la première pompe (8), et
un tuyau d'écoulement à la sortie (p9) connecté au réservoir d'eau chaude (9), le tuyau d'écoulement à la sortie (p9) permettant au milieu thermique de s'écouler hors du réservoir d'eau chaude (9) vers l'échangeur de chaleur de chauffage (Hx),
le tuyau d'écoulement à l'entrée (p8c) comporte
une première entrée d'écoulement (t6) prévue à l'intérieur du réservoir d'eau chaude (9),
une deuxième entrée d'écoulement (t7) prévue à l'intérieur du réservoir d'eau chaude (9) et prévue plus loin en aval que la première entrée d'écoulement (t6) dans une direction d'écoulement du milieu thermique, et
un mécanisme d'ouverture et de fermeture (12) prévu plus loin en aval que la première entrée d'écoulement (t6) dans la direction d'écoulement du milieu thermique et plus loin en aval que la deuxième entrée d'écoulement (t7) dans la direction d'écoulement du milieu thermique, le mécanisme d'ouverture et de fermeture (12) étant configuré pour s'ouvrir et se fermer en fonction d'un débit du milieu thermique s'écoulant à travers le tuyau d'écoulement à l'entrée (p8c), et
le mécanisme d'ouverture et de fermeture (12) est ouvert dans la première opération d'ébullition et fermé dans la deuxième opération d'ébullition.

10. Chauffe-eau (100) selon l'une quelconque des revendications 1 à 9, comprenant en outre
un circuit de réfrigérant (RC) dans lequel un compresseur (1), l'échangeur de chaleur de chauffage (Hx), un dispositif d'expansion (3), et un évaporateur (4) sont prévus, dans lequel,
où une première capacité de chauffage moyenne est une valeur obtenue en divisant une quantité de chaleur accrue dans le réservoir d'eau chaude (9) d'un début à une fin de la première opération d'ébullition, par une quantité de temps du début à la fin de la première opération d'ébullition, et
où une deuxième capacité de chauffage moyenne est une valeur obtenue en divisant une quantité de chaleur accrue dans le réservoir d'eau chaude (9) d'un début à une fin de la deuxième opération d'ébullition, par une quantité de temps du début à la fin de la deuxième opération d'ébullition,
le dispositif de commande (Cnt1) est configuré pour commander le compresseur (1) de manière telle que la deuxième capacité de chauffage moyenne soit inférieure à la première capacité de chauffage moyenne, et
commander le dispositif d'expansion (3) de manière telle qu'un deuxième degré de sous-refroidissement pendant la deuxième opération d'ébullition soit supérieur à un premier degré de sous-refroidissement pendant la première opération d'ébullition.

11. Chauffe-eau (100) selon l'une quelconque des revendications 1 à 9, comprenant en outre
un circuit de réfrigérant (RC) dans lequel un compresseur (1), l'échangeur de chaleur de chauffage (Hx), un dispositif d'expansion (3), et un évaporateur (4) sont prévus.
